# EUROPÄISCHE PATENTSCHRIFT

(11) **EP 3 055 602 B1**
(45) Veröffentlichungstag und Bekanntmachung des Hinweises auf die Patenterteilung: **25.12.2019**
(21) Anmeldenummer: 14799337.2
(22) Anmeldetag: 10.10.2014
(51) Int. Cl.: F16L 53/30, F16L 59/18, F16L 37/12, F16L 37/10

(54) **MEHRTEILIGE LEITUNG MIT EINEM ISOLIERELEMENT ZUM ISOLIEREN EINES ÜBERGANGSBEREICHS ZWISCHEN STECKERBAUGRUPPEN**
MULTI-PART LINE HAVING AN INSULATING ELEMENT FOR INSULATING A TRANSITION REGION BETWEEN CONNECTOR ASSEMBLIES
CONDUITE EN PLUSIEURS PARTIES MUNIE D'UN ÉLÉMENT D'ISOLATION D'UNE ZONE DE TRANSITION ENTRE DES ENSEMBLES RACCORDS

(30) Priorität: 10.10.2013 DE 102013016855
(43) Veröffentlichungstag der Anmeldung: 17.08.2016
(73) Patentinhaber: Voss Automotive GmbH, 51688 Wipperfürth (DE)
(72) Erfinder: ISENBURG, Marco, 40885 Ratingen (DE); ETSCHEID, Tobias, 51789 Lindlar (DE); PLIETSCH, Reinhard, 42929 Wermelskirchen (DE); SCHWARZKOPF, Otfried, 51515 Kürten (DE); MITTERER, Reiner, 51688 Wipperfürth (DE); STELLUTO, Michele, 42859 Remscheid (DE)
(74) Vertreter: Rebbereh, Cornelia
(86) Internationale Anmeldenummer: PCT/EP2014/002745
(87) Internationale Veröffentlichungsnummer: WO 2015/051919

(56) Entgegenhaltungen:
- EP-A1- 0 509 899
- FR-A1- 2 659 416
- US-A- 4 084 842

## Beschreibung

Die Erfindung betrifft eine mehrteilige Leitung mit einem Isolierelement zum Isolieren eines Übergangsbereichs zwischen Steckerbaugruppen zwischen zwei Leitungsteilen, die durch Überstecken miteinander verbindbar oder verbunden sind, wobei Leitungsteile endseitig mit zumindest einer Steckerbaugruppe mit zumindest einem Halteelement versehen sind, wobei Steckerteil der Steckerbaugruppe eines Leitungsteils und Kupplungsteil der Steckerbaugruppe des benachbarten Leitungsteils durch Überstecken und Verrasten des zumindest einen Halteelements verbindbar oder verbunden sind.

Isolations- und Schutzabdeckungen zum Isolieren bzw. zum Schutz von beheizbaren Steckverbindern sind im Stand der Technik bekannt. Mit einer solchen Isolations- und Schutzabdeckung bzw. außenseitigen Kapselung versehene Steckverbinder werden hier nachfolgend als Steckerbaugruppe bezeichnet. Sie dienen zum Verbinden zumindest zweier Leitungsteile bzw. Medienleitungen ebenso wie zum Anschließen einer Medienleitung an ein beliebiges Aggregat, das insbesondere in einem Kraftfahrzeug vorgesehen ist. Über derartige Medienleitungen und Leitungsteile von diesen werden verschiedene Arten von Medien geführt, wobei diese zum Teil einen hohen Gefrierpunkt aufweisen und daher bei relativ hohen Umgebungstemperaturen bereits zum Gefrieren neigen. Hierdurch können die eigentlich durch diese Medien wahrzunehmenden Funktionen beeinträchtigt oder sogar vollständig verhindert werden. Insbesondere ist dies bei Wasserleitungen für die Scheibenwaschanlage in Fahrzeugen sowie vor allem bei sogenannten AdBlue®-Leitungen möglich, wobei AdBlue® ein hochreines Reduktionsmittel für sog. SCR-Katalysator-Systeme ist (SCR=Selective Catalytic Reduction). Es wird daher üblicherweise eine Beheizungsmöglichkeit für die Medienleitung bzw. zumindest Teile von dieser und die Steckverbinder vorgesehen, um ein Einfrieren der Medien innerhalb von diesen zu vermeiden bzw. deren Auftauen zu ermöglichen. Zum äußeren Isolieren und zum Schutz vor Beschädigungen können Medienleitungen und Steckverbinder inklusive diverser Übergangsbereiche zwischen diesen und erste Anschlussbereiche zum Anschließen der Medienleitung Isolations- und Schutzabdeckungen aufweisen.

Eine solche Isolations- und Schutzabdeckung, im Bereich der Steckverbinder einer Medienleitung in Form einer äußeren Kapselung, ist beispielsweise aus der EP 1 985 908 A1 bekannt. Durch das Vorsehen der äußeren Kapselung, die den Steckverbinder isolierend umgibt, kann zwischen diesem und der äußeren Kapselung ein Luftvolumen eingeschlossen werden, das eine thermische Isolation ermöglicht. Durch eine solche Kapselung oder Isolationsabdeckung wird lediglich ein Teil der Wegstrecke eines Mediums durch eine zumindest einen Steckverbinder umfassende Medienleitung isoliert. Gerade im Übergangsbereich von dem einen Steckverbinder zu dem mit diesem verbundenen anderen Steckverbinder, wobei insbesondere Steckerteil an dem einen Steckverbinder und Kupplungsteil an dem anderen ineinandergreifen, kann es weiterhin zu einem Einfrieren des Mediums kommen bzw. eingefrorene Stellen nur schlecht wieder aufgetaut werden, da diese Übergangsbereiche nicht isoliert sind.

Um ein solches Einfrieren und schlechtes Auftauen zu vermeiden, schlägt die DE 10 2010 035 028 A1 vor, die äußere Kapselung des Steckverbinders so auszubilden, dass beide Anschlussbereiche von diesem durch die Kapselung mit überdeckt werden, somit auch der zweite Anschlussbereich, der zum Anschließen beispielsweise eines Kraftfahrzeugaggregats dient, und diesen somit ebenfalls zu isolieren. Der erste Anschlussbereich kann mit einem Halteelement versehen sein, das am Steckerteil des benachbarten Steckverbinders angreift und diesen im Kupplungsteil hält, an dem es angeordnet ist. Eine solche Verlängerung der Isolationsabdeckung bzw. Kapselung zum Überdecken eines Steckerteils auch im Übergangsbereich zwischen zwei Isolationsabdeckungen zweier miteinander verbundener Steckverbinder erweist sich zwar grundsätzlich als vorteilhaft, kann jedoch nicht ohne größeren Aufwand vorgesehen werden, da die Steckverbinder dementsprechend ausgebildet werden müssen. Ferner ist es nicht ohne weiteres bei jeder Leitungskonstellation verwendbar. Wenn beispielsweise der sog. Übersteckbereich bei SCR-Systemen vergleichsweise groß ist, verbleibt nach dem Zurückfedern immer noch ein Spalt zwischen den Kapselungen zweier benachbarter ineinandergesteckter Stecker- und Kupplungsteile zweier Steckverbinder, durch den hindurch Kälte eindringen und das dort strömende Medium zum Einfrieren bringen kann. Die Verbindung zweier Steckverbinder wird bei SCR-Leitungen bzw. SCR-Leitungssystemen durch Stecken des Kupplungsteils auf den Steckerteil bzw. umgekehrt des Steckerteils in den Kupplungsteil hergestellt. Dabei hintergreift eine Halteklammer des Kupplungsteils einen auskragenden Bund einer SAE-Anschlusskontur (SAE J2044) des Steckerteils. Der Kupplungsteil wird bis zum Anschlag auf den SAE-Steckerteil aufgesteckt, was als Überstecken bezeichnet wird. Die Halteklammer des Kupplungsteils verrastet hinter dem Bund des Steckerteils. Durch Zurückziehen des Kupplungsteils gegen die Steckerrichtung erreicht die Halteklammer eine Verriegelungsposition, in der sich der Kupplungsteil ohne Lösen der Halteklammer nicht mehr von dem Steckerteil lösen lässt. Um den Kupplungsteil bis zum Anschlag auf den SAE-Steckerteil aufstecken, also überstecken, und die Halteklammer hinter dem Bund des Steckerteils verrasten zu können, muss eine ausreichende Länge des Steckerteils an der vom Kupplungsteil entfernten Seite hinter dem an diesem angeordneten Bund vorgesehen sein. Da der Kupplungsteil für die endgültige Positionierung in der Verriegelungsposition entgegen der Steckrichtung zurückgezogen wird, verbleibt ein relativ großer Abstand zwischen der Frontseite des Kupplungsteils und einer Frontseite eines Flansches des Steckerteils bzw. einer dieser überdeckenden Kapselung. Dieser Zwischenbereich bzw. Übergangsbereich auf dem Steckerteil ist entsprechend nicht isoliert, so dass das durch diesen hindurchströmende Medium in diesem Übergangsbereich einfrieren kann. Bei mehrteiligen Leitungen mit mehreren Leitungsteilen, die in entsprechender Weise zusammengesteckt sind, kann es vorkommen, dass dieses Problem nicht an jeder Verbindungsstelle zwischen zwei Leitungsteilen, sondern nur teilweise auftritt, insbesondere an den Stellen, die entfernt von einer Wärmezufuhr, also insbesondere entfernt von einem Motor eines Fahrzeugs, an einer Stelle im Fahrzeug oder am Fahrzeug angeordnet sind, die während der Fahrt und ggf. beim Stehen eines Fahrzeugs stark der Umgebungstemperatur bzw. dem Fahrtwind ausgesetzt ist, wie beispielsweise bei einer Anordnung unter dem oder im Fahrzeugboden. Durch die Notwendigkeit eines Übersteckens, um ein Verrasten der Halteklammer zu erreichen, also ein vollständiges Verbinden von Kupplungsteil und Steckerteil, ergibt sich die Forderung, hier eine kostengünstige und zugleich wirkungsvolle Isolierung vorzusehen, die ein Einfrieren von Medium in diesem Übergangsbereich verhindert.

Der vorliegenden Erfindung liegt daher die Aufgabe zugrunde, eine mehrteilige Leitung vorzusehen, bei der in den Übergangsbereichen bzw. Übersteckbereichen zwischen den Steckerbaugruppen, in denen keine Beheizung durch den Motor des Fahrzeugs oder andere Wärmequellen erfolgt, eine Isolierung vorzusehen, die eine kostengünstige und zugleich wirksame Isolierung des Übergangsbereichs im Betrieb und auch im Stillstand eines Fahrzeugs ermöglicht und gegen ein ungewolltes oder versehentliches Entfernen geschützt ist.

Die Aufgabe wird für eine mehrteilige Leitung nach dem Oberbegriff des Anspruchs 1 durch die kennzeichnenden Merkmale des Anspruchs 1 gelöst.

Dadurch wird ein Isolierelement zum Isolieren eines Übergangsbereichs zwischen Leitungsteilen, die durch Überstecken miteinander verbindbar oder verbunden sind, geschaffen, das es ermöglicht, während des Übersteckens beim Zusammenfügen von Kupplungsteil und Steckerteil zweier benachbarter Steckerbaugruppen axial komprimiert zu werden, sich jedoch nach dem Verrasten des Halteelements wieder auszudehnen, so dass der gesamte Übersteckbereich, also der gesamte Abstand zwischen der Frontseite eines Flansches des Steckerteils bzw. der Frontseite einer diesen zumindest teilweise umgebenden Kapselung und der Frontseite eines Flansches des Kupplungsteils oder des Halteelements und/oder einer den Kupplungsteil und das Haltelement zumindest teilweise umgebenden Kapselung, vollständig durch das Isolierelement ausgefüllt wird. Die Leitungsteile der mehrteiligen Leitung und die Steckerbaugruppen sind nach dem Steckvorgang durchgängig isoliert, da das Isolierelement den zwischen den ansonsten außenseitig durch die Kapselungen isolierten Steckverbindern, also den Steckerbaugruppen, verbleibenden Spalt bzw. die Trennstelle zwischen den Steckerbaugruppen ausfüllt und die Leitungsteile von zumindest einem Hüllrohr umhüllt sind. Die jeweilige die Steckverbinder außenseitig umgebende Kapselung kann durch miteinander verbindbare oder verbundene Schalenelemente gebildet sein oder werden und/oder durch Verguss der Steckverbinder mit einer isolierenden Masse zum Erzeugen der außenseitigen Kapselung(en). Steckpartner sind nachfolgend die Teile, die ineinandergesteckt werden, also der Steckerteil und der Kupplungsteil mit Halteelement, wobei sowohl Steckerteil als auch Kupplungsteil und ggf. auch das Haltelement zumindest teilweise von einer jeweiligen Kapselung umgeben sind. Als Steckerbaugruppe wird sowohl die Kombination aus Steckerteil und diesen zumindest teilweise umgebender Kapselung als auch Kupplungsteil und diesen zumindest teilweise umgebender Kapselung bezeichnet, also die Steckverbinder, die mit einer außenseitigen Kapselung zumindest teilweise umgeben sind.

Das Isolierelement wird somit zwischen zwei Axialflächen aufgenommen werden, die für dessen leichte Kompression im eingebauten Zustand sorgen. Der systembedingte Abstand zwischen den Axialflächen bzw. der Übersteckbereich beträgt insbesondere 2 bis 5 mm, der durch den Übersteckweg und selbstverständlich auch durch Bauteiltoleranzen bestimmt wird. Dieser Abstand kann jedoch vollständig durch das Isolierelement überdeckt und der Übersteckbereich vollständig isolierend von dem Isolierelement ausgefüllt werden. Hierdurch ist eine Isolation des Übersteckbereichs zwischen den Steckpartnern insbesondere gegen Wind, also gegen Konvektion möglich. Dementsprechend kann das Isolierelement zwischen zwei Steckerbaugruppen, also zwischen einem Steckverbinder und einer Kapselung des anderen Steckverbinders oder zwischen den beiden Steckverbindern bzw. den jeweiligen Frontflächen der Steckverbinder und/oder deren Kapselungen angeordnet sein.

In der Verrastungsposition von Kupplungsteil und Steckerteil, in der das Halteelement den vorkragenden Bund des Steckerteils hintergreift, ist das Isolierelement vorteilhaft leicht komprimiert in dem Übersteckbereich aufgenommen, um einen festen Halt und somit eine optimale Isolierung des Übergangsbereichs und dementsprechend des Steckerteils in diesem Bereich sicherstellen zu können. Das Isolierelement liegt im eingebauten Zustand verpresst zwischen zwei Axialflächen der benachbarten Steckerbaugruppen. Es ist insbesondere an oder auf einem Absatz oder Anschlag der Kapselung und/oder des Steckverbinders angeordnet. Die Kompression bzw. Verpressung kann dadurch erzielt werden, dass die (axiale) Höhe des Isolierelementes im Vergleich zur Länge des Übersteckbereichs entlang dem Steckerteil im Übermaß bemessen ist, so dass beim endgültigen Positionieren und Verrasten des Halteelements die während des Übersteckens an dem Isolierelement vorgenommene starke Kompression zwar nachlässt, jedoch eine leichte Kompression auch im Einbauzustand des Isolierelementes vorhanden ist. Vermittels dieser leichten Kompression im verrasteten Zustand des Halteelements an dem Steckerteil der benachbarten Steckerbaugruppe kann einerseits die gewünschte Isolierung, ferner für den Übersteckbereich eine Abdichtung nach außen erzielt werden.

Um zu verhindern, dass eine Wärmeleitung durch das Isolierelement hindurch auf dessen Außenseite erfolgt, besteht dieses zumindest im äußeren Bereich aus einem gering wärmeleitenden Material. Insbesondere kann das Isolierelement aus nur einem Material bestehen. Zum Schaffen einer Komprimierbarkeit erweist sich das Ausbilden zumindest teilweise aus einem komprimierbaren Material, vorteilhaft zumindest teilweise aus zumindest einem Schaummaterial. Als besonders vorteilhaft erweist sich die Verwendung eines bezüglich der Poren geschlossenzelligen Schaummaterials. Insbesondere eignet sich ein ElastomerMaterial, wie ein geschäumtes Elastomer, z.B. ein weichelastischer geschlossenzelliger Zellgummi, ein thermoplastisches Elastomer, silikonbasierte Materialien oder auch EPDM, also ein Ethylen-Propylen-Dien-Monomer. Ferner kann z.B. HNBR, also ein hydrierter Acrylnitrilbutadien-Kautschuk und/oder CR-NBR, also Polychloropren-Nitrilkautschuk, verwendet werden. Der Schäumungsgrad des Schaummaterials, also die Rohdichte vor dem Komprimieren, kann beispielsweise 0,05 kg/dm³ bis 0,5 kg/dm³, bevorzugt unter 0,15 kg/dm³ betragen. Das Isolierelement kann im eingebauten und nach dem Zusammenstecken von Kupplungsteil und Steckerteil der benachbarten Steckerbaugruppe zweier benachbarter Leitungsteile komprimierten Zustand um 5 bis 30 % gegenüber dem nicht komprimierten Zustand komprimiert sein. Nach dem Steckvorgang liegt das Isolierelement axial komprimiert in einem Spalt zwischen den Steckerbaugruppen bzw. Steckpartnern. Das Isolierelement weist in nicht komprimierter Ausgangslage eine erste axiale Höhe s₀ auf, während des Übersteckens und starken Komprimierens eine zweite axiale Höhe s₁ und in der Endmontagelage bei demgegenüber geringerer Kompression eine dritte axiale Höhe s₂, wobei s₀ <s₂<s₁ ist und wobei s₀ größer als die Spaltbreite s_{Sp} ist. Diese entspricht demgemäß im Wesentlichen der dritten axialen Höhe s₂ des fertig montierten Isolierelements.

Als besonders vorteilhaft erweist es sich, das Isolierelement aus nicht nur einem Material auszubilden, sondern insbesondere zweischichtig aus unterschiedlichen Materialien. Hierbei kann eine innere und eine äußere Schicht vorgesehen sein, wobei die innere Schicht wärmeleitend und die äußere Schicht isolierend ausgebildet ist. Hierdurch ist es möglich, das Isolierelement einerseits besonders gut isolierend und andererseits wärmeleitend auszubilden. Das für die innere Schicht verwendete wärmeleitende Material muss nicht unbedingt kompressibel sein, solange es beim Steckvorgang der Steckpartner und in der Endposition des Isolierelementes nicht zwischen den während des Übersteckvorgangs das Isolierelement komprimierenden Axialflächen der Steckerbaugruppen positioniert wird oder ist.

Sind die zu dem Isolierelement benachbart angeordneten Steckerbaugruppen, insbesondere die ineinandergreifenden Steckerteile und Kupplungsteile wärmeleitend ausgebildet, bestehen diese insbesondere zumindest teilweise aus einem wärmeleitenden Material, erweist es sich als vorteilhaft, auch das Isolierelement wärmeleitend auszubilden, so dass eine Wärmeleitung durch dieses hindurch möglich ist. Ist das Isolierelement mehrschichtig aufgebaut, kann die innere Schicht beispielsweise als Aluminiumschicht oder Aluminiumkaschierung der äußeren Schicht und/oder in Form einer Wärmeleithülse, insbesondere Metallbuchse, insbesondere Edelstahlbuchse, ausgebildet sein. Durch das Vorsehen einer Aluminiumschicht oder Aluminiumkaschierung als innerer Schicht wird eine wärmeleitende Schicht vorgesehen, die eine Wärmeleitung zwischen den Steckpartnern erlaubt. Zugleich wird eine äußere Isolation durch das Schaummaterial der äußeren Schicht erzielt. Durch das Vorsehen einer Wärmeleitbuchse bzw. Metallbuchse wird eine Basis geschaffen, auf die die Schaumschicht als äußere Schicht auf einfache Weise aufgebracht werden kann.

Durch das vorteilhafte Vorsehen einer geschlossenen Ringform des Isolierelementes kann auch bei Alterung desselben und/oder Verschmutzung von diesem verhindert werden, dass das Isolierelement von dem Steckerteil ungewollt abfällt. Vielmehr wird es axial auf den Steckerteil aufgesteckt und hinter den an diesem angeordneten Bund zwischen diesem und einem Flansch des Steckerteils bzw. einer Frontseite einer dieser zumindest teilweise umgebenden Kapselung positioniert. Durch das Vorsehen des ringförmigen Isolierelementes zwischen Bund und Flansch des Steckerteils bzw. Frontseite einer diesen umgebenden Kapselung kann ein ungewolltes Abfallen von der Steckerbaugruppe sicher verhindert werden.

Bei Vorsehen des ringförmigen Isolierelementes ist es jederzeit möglich, das Haltelement zu bedienen, da das Isolierelement dieses nicht überdeckt. Ferner wird durch das Isolierelement eine Isolierabdeckung für den Übersteckbereich geschaffen, die sehr viel kostengünstiger als das Ausbilden der Kapselung nach der DE 10 2010 035 028 A1 ist und im Vergleich zu dieser eine noch bessere Isolierung gestattet.

Vorteilhaft weist das ringförmige Isolierelement nach dem Aufstecken auf den Steckerteil zumindest im Übersteckbereich, also im Bereich zwischen dessen Bund und dessen Flansch bzw. der Frontseite einer auf diesen aufgefügten Kapselung, Spiel zur Außenseite des Steckerteils auf. Hierdurch ist eine besonders gute Isolierwirkung möglich, da zwischen Isolierelementinnenseite und Steckerteiloberfläche Luft eingeschlossen wird und der Isolierung dienen kann. Das Spiel bzw. der Abstand kann sich auch erst in der komprimierten Aufnahme zwischen den Axialflächen von Steckerteil und Kupplungsteil bzw. Halteelement oder von einer den Steckerteil umgebenden Kapselung und einer den Kupplungsteil und ggf. auch das Halteelement umgebenden Kapselung einstellen.

Zum weiteren Verbessern der Isolierwirkung kann im Bereich der inneren Ringöffnung des ringförmigen Isolierelementes zumindest eine Aussparung und/oder Öffnung zum Einschließen von Luft vorgesehen sein. Die Aussparung und/oder Öffnung kann eine beliebige Formgebung aufweisen, beispielsweise können mehrere kreissegmentförmige Aussparungen im Bereich um die innere Ringöffnung herum vorgesehen werden. Hierdurch kann auch gezielt an lediglich einigen Stellen zusätzlich Luft eingeschlossen werden, somit partiell ein besonders gutes Isolieren vorgesehen werden.

Insbesondere vor der Montage des Steckerteils an dem Kupplungsteil kann eine Fixiereinrichtung vorgesehen werden, die das Isolierelement auf dem Steckerteil festhält. Beispielsweise kann eine solche Fixiereinrichtung auf das Ende des Steckerteils bis zum Bund oder sogar dem Isolierelement aufgeschoben werden. Durch Vorsehen eines gegenüber dem Innendurchmesser des ringförmigen Isolierelementes größeren Außendurchmessers des Fixierelements kann das Isolierelement auf dem Steckerteil fixiert werden. Ebenfalls ist es möglich, eine kappenförmige Abdeckung zum Sichern des Isolierelementes auf dem Steckerteil vorzusehen, die vor der Montage des Steckerteils an einem Kupplungsteil auf das Steckerteilende aufgefügt ist und endseitig mit einem vorkragenden Element, insbesondere einer vorkragenden Endplatte, versehen ist, das bzw. die einen größeren Durchmesser aufweist als dem Innendurchmesser des ringförmigen Isolierelementes entspricht. Auch hierdurch kann ein ungewolltes Herabfallen des Isolierelementes von dem Steckerteil vermieden werden.

Das ringförmige Isolierelement kann weiter vorteilhaft eine im Wesentlichen runde und/oder mehreckige außenseitige Formgebung, insbesondere mehreckige Formgebung mit gerundeten Eckbereichen, aufweisen. Die äußere und innere Formgebung des Isolierelementes kann von dem jeweiligen Verwendungsfall bzw. der Einbausituation in der Umgebung des Isolierelementes abhängig gemacht werden.

Der Durchmesser der inneren Durchgangsöffnung des Isolierelementes kann beispielsweise 3 bis 6 mm, insbesondere 4 mm, betragen. Die Wandstärke des Isolierelementes kann z.B. 2 bis 7 mm, insbesondere 3 mm betragen.

Es können Mittel zum Befestigen des Isolierelementes an der Steckerbaugruppe, also dem Steckverbinder und/oder einer außenseitig diesen zumindest teilweise überdeckend vorgesehenen Kapselung, vorgesehen sein, insbesondere eine formschlüssige und/oder kraftschlüssige und/oder stoffschlüssige Verbindung und/oder zumindest ein Fixierelement, insbesondere in Form einer auf den Steckerteil des Steckverbinders aufsteckbaren oder aufgesteckten Kappe, wie vorstehend bereits beschrieben, und/oder eines flanschartigen Rastvorsprungs, und/oder ein Befestigen durch Verkleben. Anstelle eines bloßen Aufsteckens des Isolierelementes auf den Steckerteil und Anordnens zwischen Flansch und Bund des Steckerteils kann das Isolierelement an dem Steckverbinder und/oder der diesen zumindest teilweise umgebenden Kapselung befestigt sein. Die Befestigung kann durch Formschluss und/oder Kraftschluss und/oder Stoffschluss erfolgen. Eine Möglichkeit besteht daher darin, das Isolierelement auf zumindest einem Axialabsatz der Kapselung und/oder des Steckverbinders anzuordnen. An dem Steckverbinder und/oder der diesen umgebenden Kapselung kann zumindest eine axiale Auflagefläche zum Auflagern und axialen Abstützen des Isolierelementes vorgesehen sein. Hierdurch wird das Isolierelement nicht nur anfänglich in seiner Position an der Steckerbaugruppe fixiert, sondern ihm ist auch beim Komprimieren eine definierte Aufnahmefläche an dem Steckverbinder bzw. dessen Kapselung zugeordnet, an der sich das Isolierelement optimal anlegen kann.

Die bei einer Wärmequelle, wie einem Fahrzeugmotor, angeordnete Leitungsseite einer Medienleitung kann mit hohen Temperaturen von 120 ° bis 140 °C, kurzzeitig für beispielsweise bis zu 15 min. mit einer Temperatur von bis zu 220 °C beaufschlagt werden. Die mehrteilige Leitung kann daher zwei Leitungsteile aufweisen, von denen der eine aus einem hochtemperaturbeständigen Material und der andere aus einem demgegenüber weniger temperaturbeständigen Material besteht, wobei das Isolierelement in dem Verbindungsbereich zwischen den beiden Leitungsteilen vorgesehen ist. Hierdurch ist es möglich, dem Erfordernis der hohen Temperaturbeständigkeit der Leitung in der Nähe der Wärmequelle nachzukommen und zugleich nicht die gesamte Leitung aus einem hochtemperaturbeständigen Material ausbilden zu müssen, das hochpreisig ist. Sofern sinnvoll oder erforderlich, kann die mehrteilige Leitung drei Leitungsteile aufweisen, von denen der eine aus einem hochtemperaturbeständigen Material und die beiden anderen Leitungsteile aus demgegenüber weniger temperaturbeständigem Material bestehen, wobei in den beiden Verbindungsbereichen zwischen den Leitungsteilen jeweils ein Isolierelement angeordnet ist.

Üblicherweise wird je fluidische Trennstelle lediglich ein Isolierelement benötigt. Fluidische Trennstelle ist jegliche Trennstelle, bei der eine Steckerbaugruppe, auf die das Isolierelement aufgebracht werden kann, vorgesehen ist, also beispielsweise eine Steckverbindung zwischen zwei Leitungsteilen oder auch zwischen einem Leitungsteil und einem Aggregat. Bei Verwenden zweier Steckerteile, auch als SAE-Male bezeichnet, zum Verbinden zweier Steckerbaugruppen werden vorteilhaft zwei Isolierelemente verwendet, jeweils ein Isolierelement je Steckerbaugruppe, da auf diesem ansonsten nach dem Steckvorgang ein Spalt verbleibt, der unisoliert bliebe. Beispielsweise können je Medienleitung ein bis zwei fluidische Trennstellen vorgesehen werden, die entsprechend ihrer Positionierung mit einem Isolierelement versehen werden können. Wie bereits erwähnt, wird das Isolierelement vorteilhaft an Trennstellen, die bei einem Fahrzeug dem Fahrtwind bzw. Konvektion ausgesetzt sind, verwendet. Ebenfalls ist selbstverständlich ein Einsatz an anderen Stellen, die nicht dem direkten Fahrtwind ausgesetzt sind, möglich und für die Wärmeisolation förderlich.

Das Isolierelement kann außenseitig ein Schürzenelement, insbesondere in Form eines aus Gummimaterial gefertigten vorhangartigen Elements, aufweisen. Durch das Schürzenelement kann beispielsweise das Halteelement zumindest teilweise überdeckt und winddicht abgeschirmt werden, so dass auch im Bereich des Halteelements eine zusätzliche Isolation durch das Vorsehen des Isolierelementes mit Schürzenelement vorgesehen werden kann. Ferner kann es am Steckverbinder bzw. der Steckerbaugruppe vormontiert werden. In diesem Falle wird das Isolierelement somit nicht am Steckerteil, sondern am Kupplungsteil vormontiert. Es ist weiterhin ein leichtes Zusammen- und Überstecken des Steckerteils und des Kupplungsteils möglich, wobei nach dem erfolgten Steckvorgang die fluidische Trennstelle optimal isoliert wird.

Das Schürzenelement kann beispielsweise als eine äußere Kante des Isolierelementes in der Form eines Bechers angespritzt werden oder sein. Das Schürzenelement kann nach der Montage des Isolierelementes und dessen endgültigen Positionieren zwischen den Steckerbaugruppenumgeklappt werden, um beispielsweise weitere mögliche Lufteintrittsstellen, wie im Bereich des Halteelements, abzudecken und hierdurch zu isolieren. In einer besonderen Ausgestaltung kann das Schürzenelement dabei beispielsweise lediglich über ¾ des Umfangs des Isolierelementes hinweg sich erstrecken, dementsprechend auch lediglich über ¾ des Umfangs beispielsweise des Halteelements und lediglich in dem Bereich, der einen ungewollten Lufteintritt ermöglichen würde. Hierdurch wird die Montage gegenüber dem Ausbilden des Schürzenelements vollumfänglich um das Isolierelement herum erleichtert, da das Umklappen und Positionieren auf insbesondere dem Halteelement und später die Demontage der Steckverbindung deutlich vereinfacht wird.

Bei der Materialwahl des Isolierelementes kann das Material nicht nur kompressibel, sondern auch dehnbar sein. Hierdurch ist auch bei axialem Bewegen der Medienleitung, die mit zumindest einem Isolierelement versehen ist, ein dauerhaftes Anliegen, also ein Kraftschluss, an den Stirnflächen des Steckerteils der einen Steckerbaugruppe und des Kupplungsteils der anderen Steckerbaugruppe bzw. an den entsprechend diese zumindest teilweise umgebenden Kapselungen möglich und gewährleistet. Durch die Verwendung eines dehnbaren Materials ist es möglich, bei der Montage des Isolierelements am Steckerteil den Bund von diesem bzw. den Rastnocken, den das Halteelement hintergreift, beschädigungsfrei zu überwinden, ohne dass zwischen dem ringförmigen Isolierelement und der Oberseite des Steckerteils an der Positionierungsstelle des Isolierelementes nachfolgend ein Luftspalt verbliebe.

Sofern ein solcher gezielt vorgesehen werden soll, kann dies selbstverständlich auch bei einem dehnbaren Material erfolgen.

Insbesondere kann das Isolierelement eingefärbt sein, beispielsweise in der Farbe schwarz, die die höchste UV-Beständigkeit aufweist. Auch die Verwendung anderer Farben ist selbstverständlich möglich. Durch das Einfärben des Isolierelements kann es ferner eine Kennzeichnungsfunktion bzw. Farbkodierung für unterschiedliche Leitungen vorgesehen werden. Dies erweist sich nicht nur an den fluidischen Trennstellen, sondern auch beispielsweise bei der Verwendung mehrerer Steckerbaugruppen, z.B. im Bereich eines Fahrzeugtanks oder einer Dosierpumpe, die in gleicher Größe bzw. in gleichen Abmessungen ausgebildet sind, als vorteilhaft, um die richtige Steckerbaugruppe schnell und eindeutig auffinden zu können.

Anstelle der Verwendung eines geschlossenen ringförmigen Isolierelements kann dieses auch mit einer Trennstelle, insbesondere in Ausbildung als geschlitztes oder c-förmiges Isolierelement, ausgeführt werden. Hierdurch ist eine Montage des Isolierelementes auch nach dem Steckverbinden der Steckpartner bzw. Steckerbaugruppen im Bereich der fluidischen Trennstelle noch möglich, was bei einem Ausbilden einer geschlossenen Ringform nicht mehr der Fall ist.

Ist das Isolierelement vor der Auslieferung einer Medienleitung an einen Kunden, bereits an zumindest einer Steckerbaugruppe befestigt, kann als Fixiereinrichtung und somit als Verliersicherung der Schmutzstopfen, der üblicherweise ohnehin endseitig auf dem Steckerteil aufgesteckt wird, zum Schützen von diesem und Sichern des Isolierelementes auf dem Steckerteil bis zum Zusammenstecken mit einem Kupplungsteil verwendet werden. Je nach Ausgestaltung des ringförmigen Isolierelementes hält sich dieses jedoch hinter dem Bund des Steckerteils auch selbstständig fest, so dass eine weitere Fixierung vor dem Zusammenstecken des Steckerteils mit einem Kupplungsteil nicht erforderlich ist. Soll eine besonders sichere Fixierung vorgesehen werden, kann das Isolierelement einseitig an einer Steckerbaugruppe beispielsweise durch Kleben oder Aufstecken auf einem dort vorgesehenen Vorsprung befestigt werden. Hierfür kann bereits das Isolierelement mit einer durch eine Schutzfolie geschützten Klebefläche versehen werden, die nach der Montage an der Steckerbaugruppe zum klebenden Befestigen an dieser dient. Die Klebefläche wird an dem Isolierelement stirnseitig vorgesehen, so dass eine Front- bzw. stirnseitige Verklebung auch an der Steckerbaugruppe, insbesondere deren Kapselung, erfolgt. Ferner ist es ebenfalls möglich, das Isolierelement bereits bei der Herstellung des Steckerteils oder des Kupplungsteils mit an diesen anzuspritzen. Hierdurch kann eine besonders gute Sicherung des Isolierelementes am Steckerteil bzw. Kupplungsteil vorgesehen werden.

Wie bereits erwähnt, kann die Medienleitung nicht nur zweigeteilt ausgebildet sein, also zwei Leitungsteile aufweisen, die miteinander über eine fluidische Trennstelle mit jeweiligen Steckerbaugruppen verbunden werden können bzw. verbunden sind, sondern auch als eine drei- oder mehrteilige Medienleitung bzw. beheizbare Medienleitung. Im Zuge von Systemvereinfachungen verschiebt sich bei Fahrzeugen die Dosierstelle mit Dosiermodul immer weiter in Richtung des Motorblocks des Fahrzeugs. Hierdurch erweist es sich als vorteilhaft, die beheizbare Medienleitung in unterschiedliche Leitungsteile, die miteinander gekoppelt werden, nämlich über Steckerbaugruppen, aufzuteilen, da eine Beheizung nahe an der zu beheizenden Stelle im Bereich der an die beheizbare Medienleitung angeschlossenen Komponenten vorgesehen werden kann. Gerade im Bereich eines Fahrzeugstanks wird üblicherweise eine Beheizung vorgesehen, während im Bereich des Motorblocks eine solche üblicherweise nicht erforderlich ist. Im Bereich eines Fahrzeugstanks wird üblicherweise eine Beheizung der Medienleitung bzw. ein Vorsehen eines Isolierelementes erfolgen, während in Richtung einer Dosierstelle einer Einspritzeinrichtung, also abgasstrangnah bzw. motornah, üblicherweise ausreichend Wärme durch Abgas und Motor erzeugt wird, so dass dort ein Isolierelement nicht unbedingt vorgesehen zu werden braucht. Die dort vorhandene Wärmestrahlung reicht häufig bereits zum Erwärmen des durch die beheizbare Medienleitung strömenden Mediums aus, also insbesondere zum Auftauen des Mediums bei niedrigen Umgebungstemperaturen außerhalb des Fahrzeugs, so dass es auch an den fluidischen Trennstellen dort selten zu einem Einfrieren des Mediums kommt.

Im Bereich einer Dosierstelle einer Einspritzeinrichtung bzw. im Bereich eines Motorblocks wird häufig eine hochtemperaturfeste Leitung bzw. ein hochtemperaturfester Leitungsteil verwendet, der vergleichsweise teuer ist aufgrund der Verwendung des hochtemperaturfesten Materials. Um die Kosten so niedrig wie möglich zu halten, ist es ferner üblich, in ausreichender Entfernung von den Wärmequellen der Dosierstelle bzw. des Motorblocks eine Standardleitung bzw. ein Leitungsteil vorzusehen, der aus einem deutlich günstigeren Material besteht, allerdings weniger temperaturfest ist. Zum Verbinden der beiden Leitungsteile wird üblicherweise ebenfalls eine Steckerbaugruppe verwendet, bei der zumindest ein Isolierelement vorgesehen werden kann.

Der Steckerteil, insbesondere SAE-Male, besteht häufig aus einem Kunststoffmaterial. Bei zumindest zweischichtigem Ausbilden des Isolierelementes erweist es sich daher als vorteilhaft, entweder die bereits erwähnte Wärmeleithülse als innere Schicht des Isolierelementes zu verwenden oder beispielsweise einen wärmeleitfähigen Kunststoff, der außenseitig mit kompressiblem Material, insbesondere Schaummaterial, umspritzt bzw. umgeben ist.

Je nach Ausgestaltung der Medienleitung als ein- oder mehrteiliger Medienleitung und je nach dem Wärmebedarf beim Beheizen der einzelnen Leitungsteile der Medienleitung kann eine unterschiedliche Anzahl von Heizelementen bzw. Litzen zum Beheizen der Leitungsteile und der Steckerbaugruppen verwendet werden. Beispielsweise ist die Verwendung lediglich eines Heizelements, eines Zweilitzers oder auch eines Vierlitzers möglich. Je verwendetem Leitungsteil kann die Anzahl der vorgesehenen Heizelemente variiert werden, ebenso wie die Anzahl der verwendeten Isolierelemente. Bei einer Kombination eines hochtemperaturfesten Leitungsteils und eines aus einem Standardmaterial bestehenden Leitungsteils wird beispielsweise ein Isolierelement ausreichend sein, bei der Verwendung eines hochtemperaturfesten Leitungsteils in Kombination mit zwei weiteren Leitungsteilen, die aus einem Standardmaterial bestehen, das weniger temperaturfest ist, erweist sich das Verwenden zweier Isolierelemente als vorteilhaft.

Bei Verwenden eines zumindest zweischichtigen Isolierelementes ist es ferner möglich, die innere Schicht oder eine innere Schicht mit einem höheren Schäumungsgrad als die oder eine äußere Schicht zu versehen. Hierdurch ist gerade im äußeren Bereich eine sehr gute Kompressibilität und im inneren Bereich ein sehr guter Halt auf dem Steckerteil der entsprechenden Steckerbaugruppe möglich.

Der Bereich der fluidischen Trennstelle nach dem endgültigen Steckverbinden von Steckerteil und Kupplungsteil zweier benachbarter Leitungsteile bzw. Steckerbaugruppen weist einen Spalt bzw. Abstand zwischen den jeweiligen benachbarten Axialflächen von Steckerteil und Kupplungsteil bzw. deren äußeren Kapselungen von 5 mm + 1-2 mm auf. Es erweist sich daher als vorteilhaft, das Isolierelement mit einer axialen Höhe zu versehen, die etwas darüber liegt, um eine Kompression zu ermöglichen.

Durch das Komprimieren des Isolierelementes in seiner endgültigen Positionierung an der fluidischen Trennstelle zwischen den beiden benachbarten Steckerbaugruppen in Anbringung über der fluidischen Trennstelle im Bereich des Steckerteils kann ein Eindringen von Wasser von der Außenseite in Richtung des Medium durchströmten Steckerteils vermieden werden. Ein Eindringen von Wasser würde ansonsten dazu führen, dass dieses ebenfalls mit aufgetaut werden müsste und im Zweifel beim Abstellen des Fahrzeugs bzw. durch Einwirken von niedrigen Umgebungstemperaturen wiederum mit einfrieren würde, also nicht mehr von der fluidischen Trennstelle entfernt werden könnte. Hierdurch würde permanent das Risiko des Bildens eines zumindest dünnwandigen Eispanzers um den Steckerteil herum bestehen. Dieses Risiko kann durch das Vorsehen des Isolierelementes deutlich reduziert bzw. gänzlich behoben werden.

Bezüglich der differenzierten Leistungseinkopplung bei einem mehrteiligen Aufbau der Medienleitung ist im Hinblick auf die Beheizung der einzelnen Leitungsteile auch das Material der Leitung zu berücksichtigen. Ein Leitungsteil, der aus einem temperaturfesteren Material, insbesondere Kunststoff, besteht, und dementsprechend für höhere Umgebungstemperaturen geeignet ist, wie beispielsweise im Bereich der Dosierstelle einer Einspritzeinrichtung in einem Fahrzeug, kann selbstverständlich mit mehr Leistung beaufschlagt werden als ein aus einem Standardmaterial bestehender Leitungsteil, bei dem die Auslegungsgrenzen bezüglich der thermischen Belastbarkeit zu berücksichtigen sind. Massen- oder Standardkunststoffe sind Kunststoffe, die bei einer Dauergebrauchstemperatur bis zu 90 °C, technischen Kunststoffe sind Kunststoffe, die mit einer Dauergebrauchstemperatur bis zu 140 °C und Hochleistungskunststoffe sind solche, die mit einer Dauergebrauchstemperatur über 140 °C verwendet werden können. Für höhere Umgebungstemperaturen eignet sich beispielsweise ein temperaturbeständiges Kunststoffmaterial, wie PPA (Polyphthalamid), also ein Polymer, insbesondere Hochtemperatur-Polyphtalamide (HT-PPA), für die Auslegung eines Steckverbinders bzw. für einen Leitungsteil in diesem Bereich, während im kühleren Bereich, also in dem Bereich des Fahrzeuges, der nicht durch Wärmequellen, wie Motorblock oder Einspritzanlage erwärmt wird, eignet sich für den Leitungsteil beispielsweise das Polyamid PA12, ebenso für den Steckverbinder dort verwendbar, oder auch Polyamid PA6. Neben PA12 und PA6 eigenen sich auch noch andere Polyamide, wie PA66, PA11, PA612 oder Polyetherblockamide (PEBA). Bei einer schlauchförmigen Ausbildung der Leitungsteile eignet sich für höhere Umgebungstemperaturen beispielsweise Ethylen-Propylen-Dien-Kautschuk (EPDM) für eine Temperaturbeanspruchung bis zu 170 °C, ggf. in Kombination mit einem Steckverbinder aus PPA. Als Elastomere können ferner auch hydrierter Acrylnitrilbutadien-Kautschuk (HNBR), ein Ethylen-Propylen-Kautschuk (EPM) für eine Temperaturbeanspruchung über 200 °C oder auch ein thermoplastisches Elastomer (TPE) verwendet werden. Neben den vorstehend genannten eignen sich als hochtemperaturbeständige Kunststoffe, also Hochleistungskunststoffe, noch die folgenden: Polytetraflaorethylen (PTFE), Polyvinylidenfluorid (PVDF), Polybutylenterephtalat (PBT), Polysulfone (PSU), Polyaryletherketone (PAEK), Polyphenylensulfide (PPS) und Polyimide (PI) sowie verschiedene Copolymere, die die kleinsten repetierenden Ketten-Struktureinheiten der vorgenannten Verbindungen gemeinsam enthalten. Ferner können Fluorpolymere, wie Polytetrafluorethylen (PTFE), Ethylen-Tetrafluorethylen (ETFE), Perfluorethylenpropylen (FEP), Polyarylenetherketone (PEAK), wie Polyphenylene, z. B. Poly[di-(oxy-1,4-phenylen)carbonyl-1,4-phenylen] (Polyetheretherketon, PEEK), Poty[oxy-1,4-phenylenoxy-di-(1,4-phenylencarbonyl-1,4-phenylen] (Polyetheretherketonketon, PEEKK) oder Poly[-oxy-1 ,4-phenylencarbonyl-1 ,4-phenylenoxy-di-(1 ,4-phenylencarbonyl)-1 ,4-phenylen](Polyetherketonetherketonketon, PEKEKK) oder auch Polyarylensulfide, wie Polyphenylensulfid (PPS), zur Anwendung kommen. Der Werkstoff PTFE weist die höchste thermische Beständigkeit auf.

Als Massenkunststoffe können insbesondere Polyethylen (PE), Polypropylen (PP), Polyvinylchlorid (PVC) und Polystyrol (PS) verwendet werden. Sofern sinnvoll, können technische Kunststoffe für Leitungsteile verwendet werden, wie Polymethacrylsäuremethylester (PMMA), Polyamid (PA), Polyethylenterephtalat (PET), Polycarbonat (PC), Acrylnitril-Butadien-Styrol(ABS) oder Polyoxymethylen (POM).

Bei einem motornahen Dosieren erweist sich das Vorsehen einer zweiteiligen Medienleitung als vorteilhaft, nämlich einem Dosierleitungsteil aus einem hochtemperaturfesten Material und einem Tankleitungsteil aus einem für nur geringere Umgebungstemperaturen geeigneten Material bzw. Standardmaterial. Bei einem nicht motornahen Dosieren, bei dem keine thermische Höchstbelastung auftritt, kann ebenfalls eine zweiteilige Medienleitung verwendet werden, wobei beide Leitungsteile, nämlich der Dosierleitungsteil und der Tankleitungsteil aus einem Standardmaterial, also einem Material, das nicht hochtemperaturfest ist, ausgebildet sein können. Bei einem motornahen Dosieren kann ferner eine dreigeteilte Medienleitung vorgesehen werden, die einen Dosierleitungsteil aus einem hochtemperaturfesten Material, einen Zwischenleitungsteil aus einem Standardmaterial und einen Tankleitungsteil aus ebenfalls einem Standardmaterial aufweist, wobei das Standardmaterial der beiden Leitungsteile nicht identisch sein muss, jedoch weniger temperaturfest ist als das Material des Dosierleitungsteils. Bei einem dreiteiligen Aufbau, bei dem das Dosieren nicht motornah stattfindet, also keine thermische Höchstbelastung für einen der Leitungsteile vorliegt, können alle drei Leitungsteile, nämlich der Dosierleitungsteil, der Zwischenleitungsteil und der Tankleitungsteil, jeweils aus einem Standardmaterial bestehen, wobei auch hier nicht dieselben Materialien verwendet werden müssen, sondern unterschiedliche Materialien für die einzelnen Leitungsteile vorgesehen werden können, die jedoch nicht hochtemperaturfest sein werden. Das Vorsehen des Isolierelements als thermischem Entkopplungselement erweist sich gerade bei Vorsehen zweier Leitungsteile aus einem Standardmaterial als vorteilhaft, da an der bzw. an fluidischen Trennstellen aufgrund der geringeren Leistungseinkopplung bzw. der geringeren zur Verfügung stehenden Heizleistung ein Einfrieren des durch die fluidischen Trennstellen strömenden Mediums droht. Die entlang den Leitungsteilen aus Standardmaterialen bzw. auch den Steckverbindern bzw. Steckerbaugruppen aus Standardmaterial sich erstreckenden Heizelemente zum Beheizen dieser Leitungsteile und Steckverbinder stellen lediglich eine geringere Heizleistung zur Verfügung als die Abwärme im motornahen Dosierbereich.

Zur näheren Erläuterung der Erfindung werden im Folgenden Ausführungsbeispiele von dieser näher anhand der Zeichnungen beschrieben. Diese zeige in:
- Figur 1a: eine perspektivische Ansicht zweier Steckerbaugruppen, von denen eine einen Steckerteil und die andere einen Kupplungsteil mit Halteelement aufweist, wobei beide mit einer außenseitigen Kapselung versehen sind,
- Figur 1b: eine perspektivische Ansicht der beiden Steckpartner gemäß Figur 1a in der zusammengesteckten Positionierung mit im Bereich des Steckerteils verbliebenem unisoliertem Spalt,
- Figur 2a: eine perspektivische Explosionsansicht einer Kombination aus erfindungsgemäßem Isolierelement mit den beiden Steckpartnern gemäß Figur 1a,
- Figur 2b: eine perspektivische Ansicht der zusammengesteckten Position der beiden Steckpartner gemäß Figur 2a und des erfindungsgemäßen Isolierelementes gemäß Figur 2a,
- Figur 3: eine Detailansicht als Prinzipskizze einer mit erfindungsgemäßem Isolierelement auf dem Steckerteil versehenen Steckerbaugruppe und eines Kupplungsteils mit Halteelement einer zweiten Steckerbaugruppe in der Positionierung vor dem Zusammenstecken von Steckerteil und Kupplungsteil,
- Figur 4: eine seitliche Teilschnittansicht der Steckpartner gemäß Figur 3 in der Übersteckposition, in der das Isolierelement gemäß Figur 3 stark komprimiert ist,
- Figur 5: eine seitliche, teilweise Schnittansicht der Steckpartner gemäß Figur 3, wobei diese in die gesteckte Endposition zurückgefedert und das Isolierelement in einer im Vergleich zu dem Überstecken gemäß Figur 4 geringeren Kompression angeordnet ist,
- Figur 6: eine teilweise Schnittansicht der Endlage von Isolierelement, Steckerteil, Kupplungsteil und Halteelement gemäß Figur 5,
- Figur 7: eine teilweise geschnittene Detailansicht eines erfindungsgemäßen Isolierelementes in Anbringung zwischen einem Bund eines Steckerteils einer Steckerbaugruppe und einer Frontseite einer außenseitigen Kapselung des Steckerteils,
- Figur 8: eine seitliche teilweise Schnittansicht eines erfindungsgemäßen Isolierelementes in Anbringung auf einem Steckerteil, wobei das Isolierelement durch eine Verschlusskappe auf dem Steckerteil gesichert ist,
- Figur 9: eine Frontansicht einer Steckerbaugruppe mit Steckerteil und außenseitiger Kapselung,
- Figur 10: eine Draufsicht auf eine weitere Ausführungsform eines erfindungsgemäßen Isolierelementes in rechteckiger Ausführung, passend zur axialen Anlagefläche an der Kapselung gemäß Figur 9,
- Figur 11: eine seitliche Schnittansicht eines erfindungsgemäßen Isolierelementes in radialer Verpressung auf einem Steckerteil,
- Figur 12: eine seitliche Querschnittsansicht eines erfindungsgemäßen Isolierelementes, das mit Spiel auf einem Steckerteil angeordnet ist,
- Figur 13: eine seitliche Querschnittsansicht einer weiteren Ausführungsform eines erfindungsgemäßen Isolierelementes, das mehrschichtig aufgebaut ist,
- Figur 14: eine Draufsicht und seitliche Querschnittsansicht einer weiteren Ausführungsform eines erfindungsgemäßen Isolierelements, das als einschichtiger Schaumring ausgebildet ist,
- Figur 15: eine Draufsicht auf ein erfindungsgemäßes rundes Isolierelement in zweischichtigem Aufbau,
- Figur 16: eine Draufsicht auf ein erfindungsgemäßes rundes Isolierelement mit im Inneren angeordneten Aussparungen bzw. Öffnungen zum Einschluss von Luft,
- Figur 17: eine Draufsicht auf eine weitere Ausführungsform eines erfindungsgemäßen runden Isolierelementes mit im Inneren vorgesehener Aluminiumkaschierung,
- Figur 18: eine perspektivische Ansicht einer weiteren Ausführungsform eines erfindungsgemäßen Isolierelementes aus einem leitfähigen Material,
- Figur 19: eine perspektivische Ansicht einer weiteren Ausführungsform eines erfindungsgemäßen Isolierelementes mit innenliegender Wärmeleithülse,
- Figur 20: eine seitliche Detailansicht zweier Steckpartner in Form eines Steckerteils und eines Kupplungsteils mit Halteelement, wobei der Steckerteil mit einem erfindungsgemäßen Isolierelement mit außenseitigem Schürzenelement versehen ist,
- Figur 21: eine seitliche Detailansicht des Aufbaus gemäß Figur 20, wobei das Schürzenelement des Isolierelementes über das Halteelement und einen Teil des Kupplungsteils gezogen ist,
- Figur 22: eine Prinzipskizze eines Fahrzeugs mit einer mehrteiligen Medienleitung, die sich im Bereich des Unterbodens des Fahrzeugs zwischen einem Motorblock mit Abgasturbolader und Dosierstelle und einem Harnstofftank erstreckt, und
- Figur 23: eine Prinzipskizze der zweiteiligen Medienleitung gemäß Figur 22.

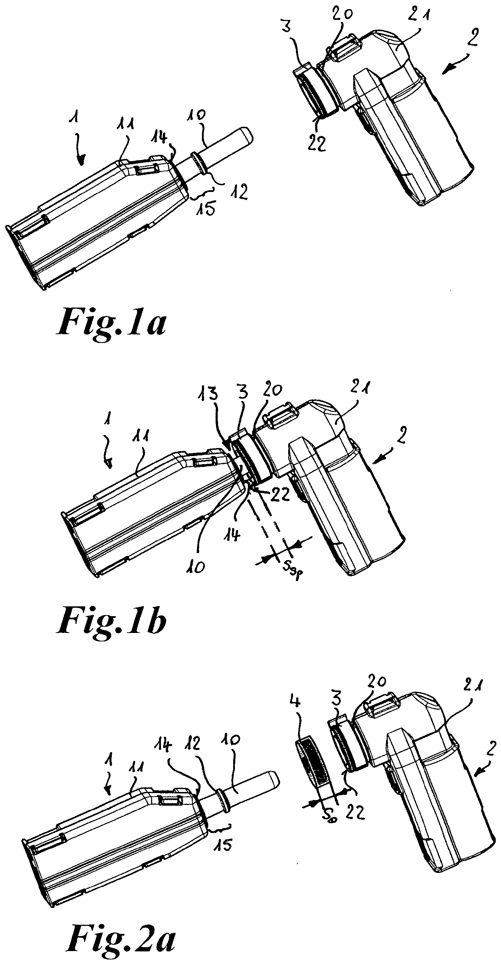

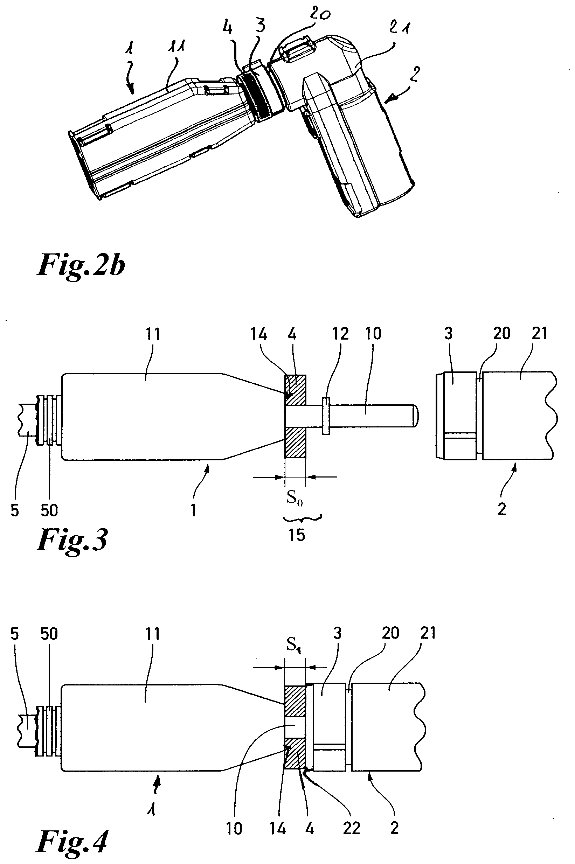

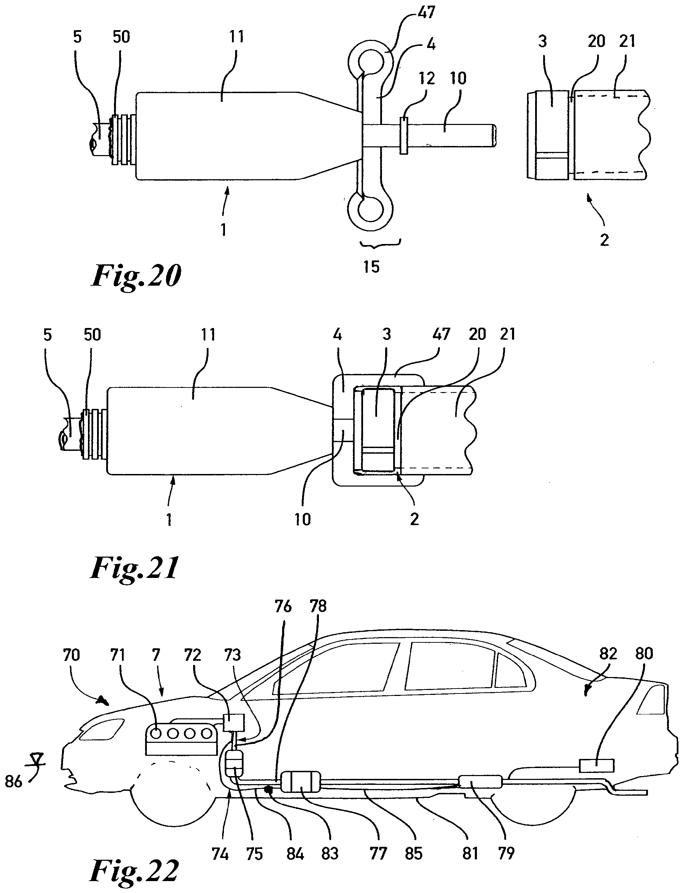

Die Figuren 1a und 1b zeigen zwei Steckpartner in Form zweier Steckerbaugruppen 1, 2, wobei die erste Steckerbaugruppe 1 als gerader Steckverbinder mit einem Steckerteil 10, der als SAE-Male ausgebildet ist, und einer außenseitigen Kapselung 11 vorgesehen ist. Die zweite Steckerbaugruppe 2 ist als Winkelsteckverbinder ausgebildet und umfasst einen Kupplungsteil 20, der mit einem Halteelement 3 versehen ist, und ebenfalls eine äußere Kapselung 21 aufweist. Die äußere Kapselung 21 erstreckt sich nicht über das Halteelement 3 hinweg, wie insbesondere Figur 1a zu entnehmen ist. In Figur 1b ist der zusammengesteckte Zustand beider Steckerbaugruppen 1, 2 gezeigt, wobei das Zusammenstecken durch sogenanntes Überstecken erfolgt. Hierbei wird der Kupplungsteil bis zum Anschlag auf den Steckerteil aufgesteckt, wobei das Halteelement hinter einem auskragenden Bund 12 des Steckerteils 10 verrastet. Durch Zurückziehen des Kupplungsteils 20 in Richtung weg von dem Steckerteil 10, also entgegen der Steckrichtung, gelangt das Halteelement in eine Verriegelungsposition bezüglich des auskragenden Bundes 12. In der Verriegelungsposition lässt sich der Kupplungsteil ohne Lösen des Halteelements nicht mehr von dem Steckerteil abnehmen. In dieser endgültigen Positionierung von Steckerteil und Kupplungsteil, die in Figur 1b gezeigt ist, verbleibt ein relativ großer Abstand bzw. Spalt 13 mit einer Spaltbreite s_{Sp} zwischen der Frontseite 22 des Kupplungsteils 20 und der Frontseite 14 der außenseitigen Kapselung 11 des ersten Steckverbinders. Je nach dem, wo dieser Spalt 13 bspw. in einem Fahrzeug wie es in Figur 22 gezeigt ist, angeordnet wird, bspw. im Bereich des Unterbodens bzw. der Längsträger des Fahrzeugs, kann durch den Steckerteil 10 und den Kupplungsteil 20 strömendes Medium im Bereich des Spalts 13 einfrieren, bspw. bei Beaufschlagen durch Wind bzw. Konvektion. Um hier eine Isolierung vorzusehen, wird ein Isolierelement 4 in dem Spalt 13 angeordnet, wie in Figur 2b in der montierten Positionierung bzw. in Figur 2a vor dem Montieren gezeigt. Im fertig montierten Endzustand liegt das Isolierelement 4 an der Kapselung 1 anderen Stirn- bzw. Frontseite 14, dort insbesondere an einem vorgesehenen Absatz und stirnseitig bzw. an der Frontseite 22 des Kupplungsteils, dort insbesondere an einem Anschlag oder Absatz an.

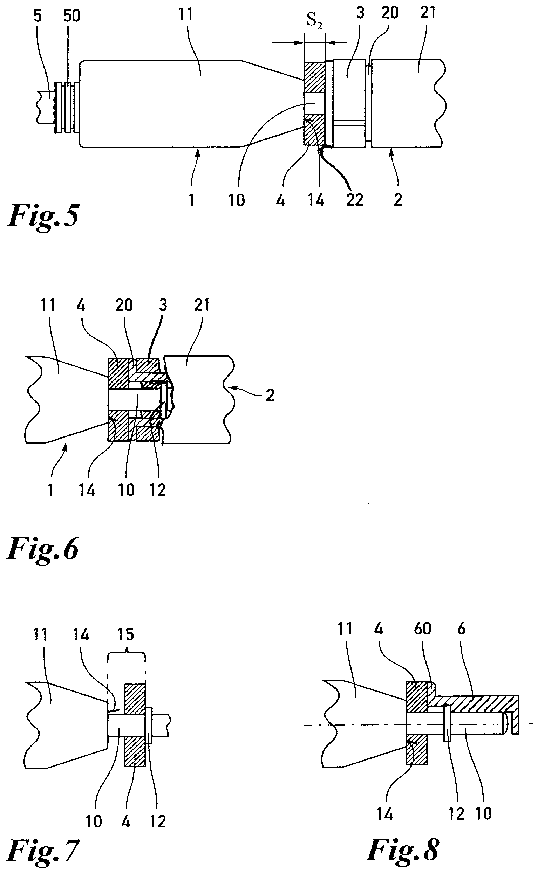

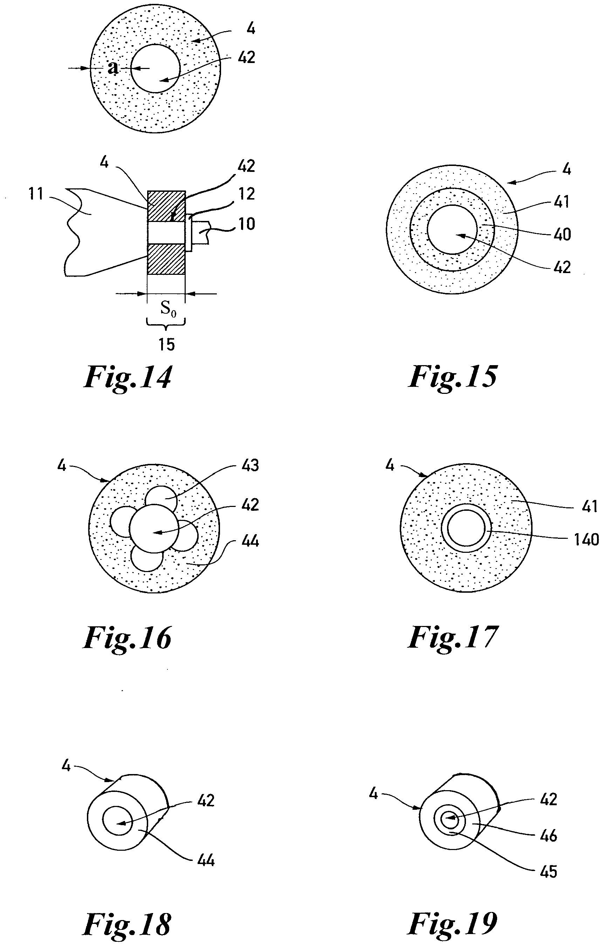

Das Isolierelement 4 ist ringförmig ausgebildet, wie besser den Figuren 3 bis 5 entnommen werden kann, die die einzelnen Schritte beim Zusammenstecken der beiden Steckpartner des Steckerteils 10 und des Kupplungsteils 20 mit Halteelement 3 zeigen. In Figur 6 ist eine Schnittansicht der endgültigen Positionierung nach dem Zusammenstecken von Steckerteil 10 mit Isolierelement 4 und Kupplungsteil 20 mit Halteelement 3 gezeigt. Wie Figur 3 entnommen werden kann, die die erste Steckerbaugruppe 1 mit einem Teil einer mit dieser verbundenen Medienleitung, nämlich einem Leitungsteil 5, der außenseitig von einem Wellrohr bzw. Hüllrohr 50 umgeben ist, zeigt, ist das Isolierelement 4 bereits in einem Übersteckbereich 15 des Steckerteils 10 angeordnet, der sich zwischen auskragendem Bund 12 und der Frontseite 14 der außenseitigen Kapselung 11 erstreckt. Das Isolierelement 4 weist eine geringere Höhe s₀ auf als der Breite des Übersteckbereichs 15 entspricht, jedoch eine größere axiale Höhe s₀ als der Spaltbreite s_{Sp} entspräche, somit ist s₀ > s_{Sp}. Wie in Figur 14 angedeutet, kann sich das Isolierelement 4 auch über die gesamte Breite des Übersteckbereichs 15 hinweg erstrecken. In Figur 4 ist der Schritt des Übersteckens von Steckerteil und Kupplungsteil mit Halteelement gezeigt. In diesem Schritt wird das Isolierelement 4 stark komprimiert. Die Höhe s₁ während der starken Kompression des Isolierelementes 4 während des Übersteckens ist kleiner als die ursprüngliche Höhe s₀ des Isolierelementes 4, wie sie in Figur 3 angedeutet ist. In Figur 5 ist die Endmontagelage von Steckerteil mit Isolierelement und Kupplungsteil mit Halteelement gezeigt. Das Isolierelement 4 ist in dieser Endmontagelage weniger stark komprimiert als während des Übersteckens, weist jedoch weiterhin eine leichte Kompression und dementsprechend eine Höhe s₂ auf, wobei s₀ <s₂<s₁ ist und s₂ im leicht komprimierten Endmontagelage-Zustand des Isolierelements 4 der Spaltbreite s_{Sp} entspricht, somit den Spalt vollständig ausfüllt. Das Isolierelement 4 wird somit zwischen dem Kupplungsteil 20 und der außenseitigen Kapselung 11 des Steckerteils 10 komprimiert verspannt bzw. verpresst und dementsprechend fest gehalten. Dies ist ebenfalls der teilweisen Schnittansicht des Details von Steckerteil mit Isolierelement und Kupplungsteil mit Halteelement gemäß Figur 6 zu entnehmen, wobei ersichtlich ist, dass sich die Frontseite 22 des Kupplungsteils 20 stirnseitig axial auf der einen Seite des Isolierelementes 4 abstützt und sich die axiale Frontseite 14 der außenseitigen Kapselung 11 des Steckerteils 10 bzw. der ersten Steckerbaugruppe 1 stirnseitig gegenüberliegend an dem Isolierelement 11 axial abstützt, somit das Isolierelement 11 zwischen zwei Axialflächen der benachbarten Steckerbaugruppen 1, 2 angeordnet ist.

In den Figuren 7 und 8 sind jeweils Fixiereinrichtungen zum Fixieren des Isolierelementes 4 auf dem Steckerteil 10 gezeigt. Nach Figur 7 ist dies der auskragende Bund 12, wie er auch bereits in Figur 3 zu sehen ist, während Figur 8 eine Verschlusskappe 6 zur weiteren Fixieren des Isolierelementes 4 auf dem Steckerteil vor der Montage des Steckerteils am Kupplungsteil vorsieht. Die Verschlusskappe 6 erstreckt sich allseitig umhüllend um den Steckerteil und den auskragenden Bund 12 hinweg und weist endseitig in Anlage an dem Isolierelement 4 einen Flansch 60 auf, der stirnseitig gegen das Isolierelement 4 drückt und entsprechend dieses axial in Anlage an der Frontseite 14 der außenseiteigen Kapselung 11 des Steckerteils 10 hält.

Das Isolierelement 4 kann farbig ausgebildet sein, um einerseits besser erkennen zu können, ob dieses montiert ist oder noch fehlt und andererseits um hierüber bestimmte Steckerbaugruppen auch optisch kennzeichnen zu können, so dass eine schnelle Montage bei einer mehrteiligen Medienleitung erfolgen kann.

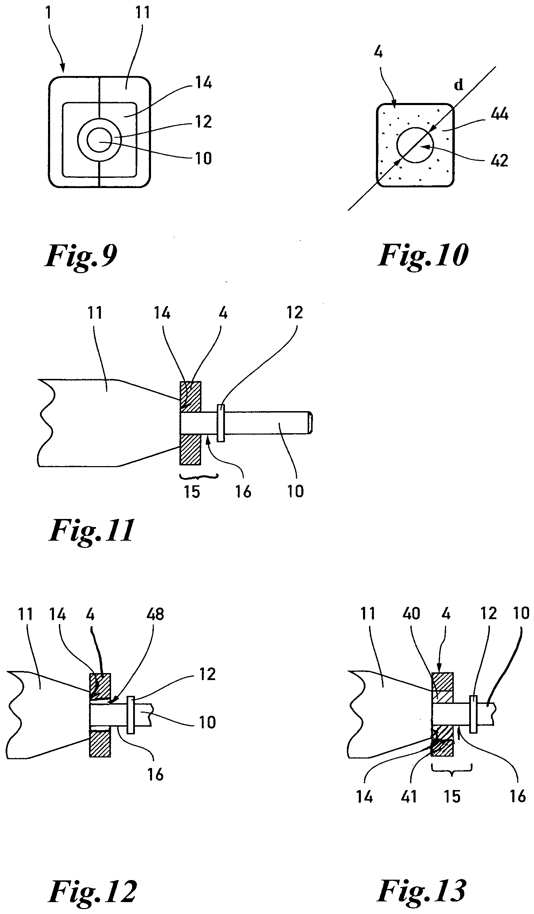

In den Figuren 10 bis 19 sind verschiedene Ausgestaltungen des Isolierelementes 4 gezeigt. Figur 9 zeigt eine Draufsicht auf die Frontseite 14 der außenseitigen Kapselung 11 der Steckerbaugruppe 1, die die axiale Anlagefläche für das Isolierelement darstellt und eine definierte axiale Anlage und Abstützung bei der Kompression bietet. Da, wie Figur entnommen werden kann, diese Anlagefläche, also die Frontfläche 14 der außenseitigen Kapselung 11, etwa rechteckig mit gerundeten Ecken ausgebildet ist, erweist es sich als vorteilhaft, auch das Isolierelement 4 entsprechend von der Formgebung her auszubilden, wie in Figur 10 angedeutet. Hier ist eine ebenfalls in der Draufsicht etwa rechteckige Formgebung mit gerundeten Ecken gezeigt, als eine Abweichung von einer runden Ringform. Gleichwohl weist das Isolierelement eine Ringform auf, ist also als geschlossener Ring mit einer inneren Durchgangsöffnung 42 mit Öffnungsdurchmesser d von z.B. 3 bis 6 mm ausgebildet, so dass eine axiale Positionierung auf dem Steckerteil 10 erfolgen kann. Grundsätzlich ist es ebenfalls möglich, einerseits das Isolierelement 4 geschlitzt oder in C-Form auszubilden, so dass eine radiale Montage am Steckerteil bzw. an einer bereits fertig montierten Kombination aus Steckerteil und Kupplungsteil möglich ist. Ebenfalls ist es möglich, das Isolierelement 4 nicht auf dem Steckerteil vorzumontieren, sondern an dem Kupplungsteil frontseitig zu befestigen, z.B. durch Kleben, so dass beim Steckvorgang der Steckerteil erst in dieses eingreift und nachfolgend die Komprimierung wie auch bei der Vormontage am Steckerteil erfolgt.

In den Figuren 14 bis 17 sind verschiedene Ausgestaltungen von in der Draufsicht runden ringförmigen Isolierelementen 4 gezeigt. Das in Figur 14 gezeigte Isolierelement ist dabei vollständig, ebenso wie das in Figur 10 gezeigte, aus nur einem Schaummaterial ausgebildet und weist eine Wandstärke a von z.B. 2 bis 7 mm auf. Wie der Querschnittsansicht des Isolierelementes in Figur 14 entnommen werden kann, erstreckt sich dieses über den gesamten Übersteckbereich 15 hinweg, weist also eine größere Höhe s₀ auf als das in Figur 3 gezeigte Isolierelement. Wie in Figur 15 gezeigt, kann das Isolierelement 4 mehrschichtig aufgebaut sein und eine innere Schicht 40 und eine äußere Schicht 41 aufweisen. Es können auch noch weitere Schichten vorgesehen werden. Bei der Ausgestaltung in Figur 15 ist der Schäumungsgrad der inneren Schicht 40 höher als der der äußeren Schicht 41. Hierdurch kann einerseits eine stärkere Isolierungswirkung in der inneren Schicht und andererseits eine größere mechanische Stabilität in der äußeren Schicht geschaffen werden. Figur 13 zeigt eine seitliche Schnittansicht des Isolierelementes 4 gemäß Figur 15, wobei Figur 13 entnommen werden kann, dass die stärker geschäumte innere Schicht 40 eng und stark isolierend auf dem Steckerteil 10 in dessen Übersteckbereich 15 anliegt, während die äußere Schicht 41 weniger stark geschäumt ist und mechanisch stabiler ist.

Bei der in Figur 16 gezeigten Ausführungsvariante sind im Inneren um die zentrale innere Öffnung 42 des ringförmigen Isolierelementes 4 herum Aussparungen 43 vorgesehen, hier vier Aussparungen 43, die Luftkanäle belassen, die zu einer noch besseren Isolierung des Steckerteils bzw. des Übersteckbereichs 15, in dem das Isolierelement 4 angeordnet ist bzw. wird, führen. Je nach dem, wie groß der durch das Vorsehen der Aussparungen 43 geschaffene Luftraum ausgebildet wird, kann der Schäumungsgrad des Isolierelementes 4 bzw. von dessen Körper 44 geringer gewählt werden, ggfs. keine Schäumung des Isolierelementkörpers 44 vorgesehen werden, jedoch eine Komprimierbarkeit von diesem.

Anstelle des Vorsehens der Aussparungen 43 kann auch umlaufend ein ringförmiger Luftspalt 48 zwischen dem Isolierelement 4 und der Außenseite 16 des Steckerteils im Übersteckbereich 15 vorgesehen werden. Das Isolierelement 4 wird somit in der in Figur 12 gezeigten Ausführungsvariante mit Spiel auf dem Steckerteil 10 aufgebracht, wobei der entstehende Luftspalt 48 isolierend wirkt. Alternativ kann das Isolierelement 4 auch spielfrei radial auf dem Steckerteil bzw. dessen Außenseite 16 im Übersteckbereich 15 aufgepresst werden, wie in Figur 11 angedeutet.

Wie Figur 9 entnommen werden kann, weist die Kapselung 11 des Steckerteils bzw. 21 des Kupplungsteils 20 bspw. eine zweiteilige Form auf, besteht insbesondere aus zwei Halbschalen, wie in Figur 9 angedeutet. Alternativ kann auch eine allumseitige Umspritzung mit der außenseitigen Kapselung vorgesehen werden. Je nach Wahl der Formgebung der außenseitigen Kapselung kann an diese auch direkt das Isolierelement mit angespritzt werden oder an diesem bspw. durch Kleben befestigt werden. Ebenfalls ist es möglich, an der Frontseite insbesondere der außenseitigen Kapselung 11, jedoch ggfs. auch der außenseitigen Kapselung 21 auskragende Elemente vorzusehen, die der Aufnahme des Isolierelementes dienen, insbesondere bei Ausbilden des Isolierelementes mit Spiel zu der Außenseite 16 des Steckerteils 10, wie in Figur 12 gezeigt.

Das Isolierelement 4 kann nicht nur isolierend, sondern auch wärmeleitend wirken, um insbesondere bei Ausbilden der benachbarten Steckerbaugruppen 1, 2 bzw. von deren außenseitigen Kapselungen 11, 21 bzw. des Steckerteils 10 und des Kupplungsteils 20 aus einem wärmeleitenden Material eine Wärmeleitung zwischen diesen durch das Isolierelement 4 hindurch vorsehen zu können. Wie in Figur 17 angedeutet, kann zu diesem Zweck als innere Schicht 40 bzw. Kaschierung 140 der äußeren Schicht 41 des Isolierelementes 4 eine wärmeleitende Kaschierung, wie bspw. eine Aluminiumkaschierung 140, vorgesehen werden. Alternativ kann eine Wärmeleithülse 45 bspw. aus Edelstahl vorgesehen und außenseitig mit einem Kunststoff umgeben werden, um das Isolierelement 4 auszubilden. Die Wärmeleithülse 45 und die außenseitige Kunststoffschicht 46 sind Figur 19 zu entnehmen. Ferner kann der gesamte Körper 44 des Isolierelementes 4 aus einem Kunststoffmaterial bestehen, das wärmeleitende Elemente enthält oder aus einer Kombination aus einem leitfähigen Kunststoffmaterial, das der Wärmeleitung dient und einem dieses umgebenden anderen Kunststoffmaterial, das nicht wärmeleitend ist, wie in Figur 10 angedeutet. Bei der in Figur 10 angedeuteten Ausführungsvariante ist der gesamte Körper 44 des Isolierelementes 4 wärmeleitend ausgebildet, besteht aus einem leitfähigen Kunststoff.

In den Figuren 20 und 21 ist eine weitere Ausführungsvariante des Isolierelementes 4 gezeigt. Dieses weist ein angeformtes Schürzenelement 47 auf. Dieses ist in Figur 20 nach der Vormontage des Isolierelementes 4 auf dem Steckerteil 10 bzw. im Übersteckbereich 15 von diesem aufgerollt gezeigt. Nach dem vollständigen Zusammenstecken von Steckerteil 10 mit Isolierelement 4 und Kupplungsteil 20 mit Halteelement 3 wird das Schürzenelement 47, wie in Figur 21 angedeutet, in Überdeckung über das Halteelement 3 und einen Teil des Kupplungsteils 20 entrollt und dient der weiteren Isolierung von diesen. Insbesondere kann hierdurch der Bereich des Kupplungsteils 20 der außerhalb der außenseitigen Kapselung 21 angeordnet und mit dem Halteelement 3 versehen ist, ebenfalls nach außen isoliert werden, so dass auch in diesem Bereich ein Einfrieren des dort hindurch strömenden Mediums sicher vermieden werden kann.

Figur 22 zeigt eine Prinzipskizze eines Fahrzeugs 7. Im vorderen Bereich 70 des Fahrzeugs 7 ist ein Motor 71 angeordnet. Benachbart zum Motor 71 ist ein Abgasturbolader 72 vorgesehen mit benachbart angeordneter Dosierstelle 73 und einer Harnstofftankleitung 74. Die Dosierstelle 73 liegt zwischen einem SCR-Katalysator 75 und dem Abgasturbolader 72. Über eine Leitung 76, in die die Tankleitung 74 mündet, sind der Abgasturbolader und der SCR-Katalysator miteinander verbunden. Der SCR-Katalysator 75 ist ferner mit einem Partikelfilter 77 über eine Leitung 78 verbunden. In hinteren Bereich ist eine Auspuffanlage 79 angeordnet ebenso wie ein Harnstofftank 80, der mit der Tankleitung 74 verbunden ist. Wie Figur 22 zu entnehmen ist, erstreckt sich die Tankleitung 74 von einer sehr motornahen Stelle entlang dem Unterboden 81 des Fahrzeugs 7 in den hinteren Bereich 82 des Fahrzeugs 7. Im motornahen Bereich ist es daher erforderlich, dass die Tankleitung aus einem hochtemperaturfesten Material besteht, während im hinteren Bereich des Fahrzeugs dies nicht erforderlich ist, da dieser, insbesondere der Unterbodenbereich des Fahrzeugs und der hintere Bereich 82 vergleichsweise kühl ist, durch Fahrtwind gerade der Bereich des Unterbodens 81 des Fahrzeugs 7 gekühlt wird. Da hochtemperaturfeste Leitungen auch hochpreisig sind, erweist es sich als vorteilhaft, hier eine mindestens zweigeteilte Tankleitung als Medienleitung zum Durchströmen mit Harnstoff als Medium mit einer fluidischen Trennstelle 83 vorzusehen. Hier können also zwei Leitungsteile vorgesehen werden, ein hochtemperaturfester Leitungsteil, der sich von der fluidischen Trennstelle 83 zur Dosierstelle 73 erstreckt, und ein zweiter Leitungsteil 85, der sich von der fluidischen Trennstelle 83 zum Harnstofftank 80 erstreckt. Das hochtemperaturfeste Material ist vorteilhaft ein Material, das Temperaturen von 120 ° bis 180 °C, insbesondere 140 °C, kurzzeitig, insbesondere 15 min., auch Temperaturen von 200 °C erträgt. Der zweite Leitungsteil 85 kann aus einem Standardmaterial bestehen, somit sehr viel niederpreisiger als der erste Leitungsteil 84 sein. Ersichtlich ist der hochtemperaturfeste erste Leitungsteil 84 dementsprechend auch kürzer ausgebildet als der zweite Leitungsteil 85.

Da die fluidische Trennstelle 83 am Fahrzeugboden bzw. Unterboden 81 angeordnet ist, wird diese von Luft umströmt, die eine Konvektion erzwingen. Dementsprechend ist es zum Vermeiden eines Einfrierens des durch die fluidische Trennstelle 83 strömenden Mediums in Form von Harnstoff erforderlich, eine Isolierung durch Vorsehen des Isolierelementes 4 vorzunehmen. Dies kann, wie in den vorstehenden Figuren erläutert, erfolgen. Die Tankleitung kann insbesondere zwischen der fluidischen Trennstelle 83 und dem hinteren Bereich 82 des Fahrzeugs 7 in den Längsträgern des Fahrzeugs bzw. entlang von diesen geführt werden, was jedoch in Figur 22 nicht gezeigt ist.

In Figur 22 wird mit dem Bezugszeichen 86 ferner noch die Höhe des Watbereichs des Fahrzeugs markiert, wobei ersichtlich ist, dass der Motorblock im Wesentlichen über dieser Linie liegt, während insbesondere die Tankleitung unterhalb von dieser liegt. Hier erweist sich das Vorsehen des Isolierelements als besonders vorteilhaft, da es hier aufgrund der Entfernung zum Motor 71 während der Fahrt des Fahrzeugs 7 und ggf. im Stand zu einer starken Beeinflussung durch gerade niedrige Umgebungstemperaturen bzw. zu einem starken Abkühlen durch den Fahrtwind kommt, da eine Anordnung unter dem bzw. im Fahrzeugboden vorliegt.

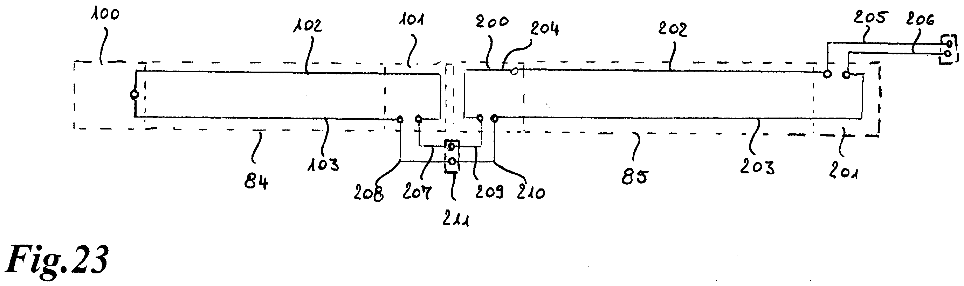

In Figur 23 ist eine Prinzipskizze der beiden Leitungsteile 84, 85, gezeigt, wobei beide Leitungsteile jeweils endseitig eine Steckerbaugruppe 100, 101 bzw. 200, 201 aufweisen. Die erste Steckerbaugruppe 100 ist motornah an der Dosierstelle angeschlossen, die zweite Steckerbaugruppe 101 ist mit dem ersten Steckverbinder 200 des zweiten Leitungsteils 85 durch Stecken verbunden. Die zweite Steckerbaugruppe 201 wird an den Harnstofftank 80 angeschlossen. Entlang den beiden Leitungsteilen 84, 85 erstrecken sich jeweils Heizelemente 102, 103 bzw. 202, 203, 204, die sich zum Teil auch über die Steckerbaugruppen hinweg erstrecken. Die Heizelemente dienen zum Beheizen der Leitungsteile ebenso wie der jeweiligen Steckerbaugruppe, an denen sie angeordnet sind. Entfernt vom Motor 71 wird eine Beheizung der Steckerbaugruppen 101, 200, 201 vorgesehen. Im Bereich der Steckerbaugruppe 101 erfolgt ein Anschluss der Heizelemente 202, 203 an elektrische Zuleiter 205, 206, die zum Anschließen an eine elektrische Stromquelle dienen. Um keine weitere Stromzufuhr zu benötigen, sind die Heizelemente 203, 204 mit den Heizelementen 102, 103 durch Verbindungsheizelemente 207, 208, 209, 210 verbunden, die im Bereich der Steckerbaugruppe 101, 200 angeordnet sind.

Die Verbindungsheizelemente 207, 209 und 208, 210 können beispielsweise über einen Stecker 211, wie in Figur 23 angedeutet, miteinander verbunden werden. Der Bereich der ersten Steckerbaugruppe 100 des ersten Leitungsteils 84 liegt, wie bereits erwähnt, im Motorraum im Bereich des Motorblocks bzw. Abgasstrangs/Abgasstroms, während die zweite Steckerbaugruppe 201 des zweiten Leitungsteils 85 im Bereich des Anschlusses an den Harnstofftank 80, also im Fahrzeugheck, ggf. in einer Radmulde des Fahrzeugs liegt. Die Steckerbaugruppen 101 und 200 des ersten Leitungsteils 84 und des zweiten Leitungsteils 85 liegen im Fahrzeugunterbodenbereich und sollten daher besonders gut isoliert werden, da dort Konvektion auftritt, die ansonsten zu einem Einfrieren des durch die Leitungsteile strömenden Mediums in Form von Harnstoff führen kann. In diesem Bereich wird das Isolierelement 4 angeordnet, dies ist in Figur 23 allerdings nicht zu sehen.

Anstelle der gezeigten Zweiteilung der Tankleitung 74 kann diese auch dreigeteilt oder mehrgeteilt sein. Wie bereits erwähnt, ist der motornahe Leitungsteil vorteilhaft aus einem wärme- bzw. hitzestabilen Kunststoff ausgebildet, während der vom Motor entfernte Leitungsteil bzw. die vom Motor entfernten Leitungsteile aus einem Standardmaterial, insbesondere Standardkunststoff bestehen können. Eine solche Leitungsteilung kann aus Kostengründen und aus Montagegründen erfolgen. Da im Motorbereich ausreichend Wärme zur Verfügung steht und wenige Konvektion auftritt, wird dort keine zusätzliche Isolierung der fluidischen Trennstelle benötigt, ebensowenig im Bereich des Harnstofftanks 80, da auch dort wenig Konvektion auftritt.

Neben den im Vorstehenden beschriebenen und in den Figuren gezeigten Varianten von Isolierelementen zum Isolieren eines Übergangsbereichs zwischen Leitungsteilen, die durch Überstecken miteinander verbunden werden, können noch zahlreiche weitere vorgesehen werden, bei denen das Isolierelement als axial kompressibler insbesondere geschlossener Ring aus einem zumindest im äußeren Bereich des Isolierelements gering wärmeleitenden Material ausgebildet ist, der mit einer inneren Durchgangsöffnung versehen ist.

### Bezugszeichenliste

- 1: erste Steckerbaugruppe
- 2: zweite Steckerbaugruppe
- 3: Halteelement
- 4: Isolierelement
- 5: Leitungsteil
- 6: Verschlusskappe
- 7: Fahrzeug
- 10: Steckerteil
- 11: außenseitige Kapselung
- 12: auskragender Bund
- 13: Spalt
- 14: Frontseite
- 15: Übersteckbereich
- 16: Außenseite
- 20: Kupplungsteil
- 21: äußere Kapselung
- 22: Frontseite
- 40: innere Schicht
- 41: äußere Schicht
- 42: zentrale innere Öffnung
- 43: Aussparung
- 44: Körper
- 45: Wärmeleithülse
- 46: äußere Kunststoffschicht
- 47: Schürzenelement
- 48: ringförmiger Luftspalt
- 50: Wellrohr/Hüllrohr
- 60: Flansch
- 70: vorderer Bereich von 7
- 71: Motor
- 72: Abgasturbolader
- 73: Dosierstelle
- 74: Tankleitung
- 75: SCR-Katalysator
- 76: Leitung
- 77: Partikelfilter
- 78: Leitung
- 79: Auspuffanlage
- 80: Harnstofftank
- 81: Unterboden
- 82: hinterer Bereich von 7
- 83: fluidische Trennstelle
- 84: erster Leitungsteil
- 85: zweiter Leitungsteil
- 86: Höhenlinie Watbereich
- 100: erste Steckerbaugruppe
- 101: zweite Steckerbaugruppe
- 102: erstes Heizelement
- 103: zweites Heizelement
- 140: Kaschierung
- 200: erste Steckerbaugruppe
- 201: zweite Steckerbaugruppe
- 202: erstes Heizelement
- 203: zweites Heizelement
- 204: drittes Heizelement
- 205: elektrischer Zuleiter
- 206: elektrischer Zuleiter
- 207: Verbindungsheizelement
- 208: Verbindungsheizelement
- 209: Verbindungsheizelement
- 210: Verbindungsheizelement
- 211: Stecker
- d: Durchmesser von 42
- a: Wandstärke von 4
- s_{Sp}: Spaltbreite
- s₀: ursprüngliche Höhe von 4
- s₁: Höhe von 4 bei starker Kompression
- s₂: Höhe von 4 bei leichter Kompression in Endmontagelage

## Patentansprüche

1. Mehrteilige Leitung (74), wobei Leitungsteile (5,84,85) endseitig mit zumindest einer Steckerbaugruppe (1,2,100,101,200,201) mit zumindest einem Halteelement (3) versehen sind, wobei Steckerteil (10) der Steckerbaugruppe (1, 100, 101) eines Leitungsteils (84) und Kupplungsteil (20) der Steckerbaugruppe (2,200,201) des benachbarten Leitungsteils (85) durch Überstecken und Verrasten des zumindest einen Halteelements (3) an dem Steckerteil (10) und Zurückziehen des Kupplungsteils (20) entgegen der Steckrichtung zum Verbringen des Halteelements (3) in eine Verriegelungsposition verbindbar oder verbunden sind,
**dadurch gekennzeichnet, dass**
im Übersteckbereich (15) des Steckerteils (10) der miteinander verbindbaren oder verbundenen Steckerbaugruppen (1,2,101,200), also in dem nach dem Verrasten des zumindest einen Halteelements (3) an dem Steckerteil (10) verbleibenden Abstand bzw. Spalt zwischen der Frontseite eines Flansches des Steckerteils (10) oder der Frontseite einer diesen zumindest teilweise umgebenden Kapselung (11) und der Frontseite eines Flansches des Kupplungsteils (20) oder des Halteelements (3) und/oder einer den Kupplungsteil (20) und das Haltelement (3) zumindest teilweise umgebenden Kapselung (21), zumindest ein Isolierelement (4) angeordnet ist, das als axial kompressibler geschlossener, mit einer inneren Durchgangsöffnung (42) versehener Ring zumindest im äußeren Bereich des Isolierelements (4) aus einem gering wärmeleitenden Material ausgebildet ist zum Verhindern einer Wärmeleitung durch das Isolierelement (4) hindurch auf dessen Außenseite, wobei das Isolierelement (4) nach dem Steckvorgang axial komprimiert in dem zwischen den Steckerbaugruppen (1,2,100,101,200,201) verbleibenden Abstand bzw. Spalt (13) liegt und den Übersteckbereich (15) vollständig isolierend ausfüllt.

2. Mehrteilige Leitung (74) nach Anspruch 1,
**dadurch gekennzeichnet, dass**
das Isolierelement (4) in nicht komprimierter Ausgangslage eine erste axiale Höhe s₀ aufweist, während des Übersteckens und starken Komprimierens eine zweite axiale Höhe s₁ und in der Endmontagelage bei demgegenüber geringerer Kompression eine dritte axiale Höhe s₂, wobei s₀>s₂>s₁ ist und wobei s₀ größer als die Spaltbreite (s_{Sp}) ist.

3. Mehrteilige Leitung (74) nach Anspruch 1 oder 2,
**dadurch gekennzeichnet, dass**
Mittel zum Befestigen des Isolierelements (4) an der Steckerbaugruppe (1,2,101,200), insbesondere eine formschlüssige und/oder kraftschlüssige und/oder stoffschlüssige Verbindung und/oder zumindest ein Fixierelement (6), insbesondere ein Fixierelement in Form eines flanschartigen Rastvorsprungs und/oder einer auf den Steckerteil (10) des Steckverbinders (1,101) aufsteckbaren oder aufgesteckten Kappe (6) und/oder ein Befestigen durch Verkleben.

4. Mehrteilige Leitung (74) nach einem der vorstehenden Ansprüche,
**dadurch gekennzeichnet, dass**
an dem Steckverbinder und/oder der diesen umgebenden Kapselung zumindest eine axiale Auflagefläche zum Auflagern und axialen Abstützen des Isolierelements vorgesehen ist.

5. Mehrteilige Leitung (74) nach einem der vorstehenden Ansprüche,
**dadurch gekennzeichnet, dass**
das Isolierelement (4) auf zumindest einem Axialabsatz der Kapselung (11,21) und/oder des Steckverbinders angeordnet ist.

6. Mehrteilige Leitung (74) nach einem der vorstehenden Ansprüche,
**dadurch gekennzeichnet, dass**
das Isolierelement (4) im eingebauten Zustand verpresst zwischen zwei Axialflächen (14,22) der benachbarten Steckerbaugruppen (1,2) liegt, insbesondere an oder auf einem Absatz oder Anschlag der außenseitigen Kapselung (11,21) und/oder des Steckverbinders angeordnet.

7. Mehrteilige Leitung (74) nach einem der vorstehenden Ansprüche,
**dadurch gekennzeichnet, dass**
das Isolierelement (4) im eingebauten und nach dem Zusammenstecken von Kupplungsteil (20) und Steckerteil (10) zweier benachbarter Steckerbaugruppen (1,2,101,200) zweier benachbarter Leitungsteile (84,85) komprimierten Zustand um 5 bis 30 % gegenüber dem nicht komprimierten Zustand komprimiert ist.

8. Mehrteilige Leitung (74) nach einem der vorstehenden Ansprüche,
**dadurch gekennzeichnet, dass**
die mehrteilige Leitung (74) zwei Leitungsteile (84,85) aufweist, von denen der eine (84) aus einem hochtemperaturbeständigen Material und der andere (85) aus einem demgegenüber weniger temperaturbeständigen Material besteht, wobei das zumindest eine Isolierelement (4) in dem Verbindungsbereich (83) zwischen den beiden Leitungsteilen (84,85) vorgesehen ist, oder dass die mehrteilige Leitung drei Leitungsteile aufweist, von denen der eine aus einem hochtemperaturbeständigen Material und die beiden anderen Leitungsteile aus demgegenüber weniger temperaturbeständigen Material bestehen, wobei in den beiden Verbindungsbereichen (83) zwischen den Leitungsteilen jeweils ein Isolierelement (4) angeordnet ist.

9. Mehrteilige Leitung (74) nach einem der vorstehenden Ansprüche,
**dadurch gekennzeichnet, dass**
das Isolierelement (4) zumindest teilweise aus zumindest einem Schaummaterial, insbesondere einem geschlossenzelligen Schaummaterial, besteht.

10. Mehrteilige Leitung (74) nach einem der vorstehenden Ansprüche,
**dadurch gekennzeichnet, dass**
das Isolierelement (4) zweischichtig ausgebildet ist, wobei eine innere (40) und eine äußere Schicht (41) vorgesehen sind, insbesondere die innere (40) Schicht aus einem anderen Material als die äußere Schicht (41) besteht und/oder einen anderen Schäumungsgrad aufweist.

11. Mehrteilige Leitung (74) nach einem der vorstehenden Ansprüche,
**dadurch gekennzeichnet, dass**
das Isolierelement (4) wärmeleitend ausgebildet ist zum Vorsehen einer Wärmeleitung durch das Isolierelement hindurch bei Vorsehen von wärmeleitend ausgebildeten benachbarten Steckerbaugruppen (1,2) und/oder eines wärmeleitend ausgebildeten Steckerteils (10) und eines wärmeleitend ausgebildeten Kupplungsteils (20) der Steckerbaugruppen (1,2) und/oder deren außenseitiger wärmeleitend ausgebildeter Kapselung (11,21).

12. Mehrteilige Leitung (74) nach Anspruch 11,
**dadurch gekennzeichnet, dass**
die innere Schicht (40,45) des Isolierelements (4) wärmeleitend und die äußere Schicht (41,44) isolierend ausgebildet ist, insbesondere die innere Schicht (40) eine Aluminiumschicht oder eine Aluminiumkaschierung (140) der äußeren Schicht (41,44) ist und/oder in Form einer Wärmeleithülse (45), insbesondere Metallbuchse, insbesondere Edelstahlbuchse, ausgebildet ist.

13. Mehrteilige Leitung (74) nach einem der vorstehenden Ansprüche,
**dadurch gekennzeichnet, dass**
das ringförmige Isolierelement (4) eine im Wesentlichen runde und/oder mehreckige außenseitige Formgebung, insbesondere mehreckige Formgebung mit gerundeten Eckbereichen, aufweist.

14. Mehrteilige Leitung (74) nach einem der vorstehenden Ansprüche,
**dadurch gekennzeichnet, dass**
im Bereich der inneren Durchgangsöffnung (42) des ringförmigen Isolierelements (4) Aussparungen (43) und/oder Öffnungen zum Einschließen von Luft zum Verbessern der Isolierwirkung vorgesehen sind.

15. Mehrteilige Leitung (74) nach einem der vorstehenden Ansprüche,
**dadurch gekennzeichnet, dass**
der Durchmesser (d) der inneren Durchgangsöffnung (42) des Isolierelements (4) 3 bis 6 mm, insbesondere 4 mm, beträgt und dass die Wandstärke (a) des Isolierelements (4) 2 bis 7 mm, insbesondere 3 mm beträgt.

## Claims

1. A multipart line (74), wherein line parts (5, 84, 85) are provided with at least one plug assembly (1, 2, 100, 101, 200, 201), having at least one retaining element (3), at their ends, wherein a plug part (10) of the plug assembly (1, 100, 101) of a line part (84) and a coupling part (20) of the plug assembly (2, 200, 201) of the adjacent line part (85) are connectable or connected by fitting and latching the at least one retaining element (3) over the plug part (10) and drawing back the coupling part (20) in opposition to the fitting direction for bringing the retaining element (3) into a locking position,
**characterised in that**
in the fitting region (15) of the plug part (10) of the mutually connectable or connected plug assemblies (1, 2, 101, 200), i.e. in the space or gap which, after the latching of the at least one retaining element (3) on the plug part (10), remains between the front side of .a flange of the plug part (10), or the front side of an enclosure (11) at least partially surrounding this, and the front side of a flange of the coupling part (20) or the retaining element (3), and/or an enclosure (21) at least partially surrounding the coupling part (20) and the retaining element (3), at least one insulating element (4) is provided, which is formed as an axially compressible, closed ring which is provided with an inner through opening (42) and made from a material with low thermal conductivity, at least in the outer region of the insulating element (4), for preventing thermal conduction through the insulating element (4) to the outside thereof, wherein, after the fitting procedure, the insulating element (4) lies axially compressed in the spacing or gap (13) remaining between the plug assemblies (1, 2, 100, 101, 200, 201) and fills the fitting region (15) completely in an insulating manner.

2. The multipart line (74) according to Claim 1,
**characterised in that**
the insulating element (4) has a first axial height s₀ in the non-compressed starting position, an axial height s₁ during the fitting procedure and under high compression, and a third axial height s₂ in the final assembled position under comparatively lower compression, wherein s₀>s₂>s₁ and wherein s₀ is greater than the gap width (s_{Sp}).

3. The multipart line (74) according to Claim 1 or 2,
**characterised in that**
means for fastening the insulating element (4) on the plug assembly (1, 2, 101, 200), in particular a form-fitting and/or force-fitting and/or material-fitting connection and/or at least one securing element (6), in particular a securing element in the form of a flange-like latching projection and/or a cap (6) which can be fitted, or is fitted, onto the plug part (10) of the plug connector (1, 101) and/or fastening by means of adhesion.

4. The multipart line (74) according to one of the preceding claims,
**characterised in that**
at least one axial bearing surface for bearing and axially supporting the insulating element is provided on the plug connector and/or the enclosure surrounding this.

5. The multipart line (74) according to one of the preceding claims,
**characterised in that**
the insulating element (4) is arranged on at least one axial shoulder of the enclosure (11, 21) and/or the plug connector.

6. The multipart line (74) according to one of the preceding claims,
**characterised in that**,
in the installed state, the insulating element (4) lies pressed between two axial faces (14, 22) of the adjacent plug assemblies (1, 2), in particular arranged in or on a shoulder or stop of the outer enclosure (11, 21) and/or the plug connector.

7. The multipart line (74) according to one of the preceding claims,
**characterised in that**,
in the installed and compressed state following the fitting-together of the coupling part (20) and plug part (10) of two adjacent plug assemblies (1, 2, 101, 200) of two adjacent line parts (84, 85), the insulating element (4) is compressed by 5% to 30% compared to the non-compressed state.

8. The multipart line (74) according to one of the preceding claims,
**characterised in that**
the multipart line (74) has two line parts (84, 85), of which one (84) is made from a material with a high temperature resistance and the other (84) is made from a material with a comparatively lower temperature resistance, wherein the at least one insulating element (4) is provided in the connecting region (83) between the two line parts (84, 85), or **in that** the multipart line has three line parts, of which one is made from a material with a high temperature resistance and the two other line parts are made from a material with a comparatively lower temperature resistance, wherein a respective insulating element (4) is arranged in the two connecting regions (83) between the line parts.

9. The multipart line (74) according to one of the preceding claims,
**characterised in that**
the insulating element (4) is made at least partially from at least one foam material, in particular a closed-cell foam material.

10. The multipart line (74) according to one of the preceding claims,
**characterised in that**
the insulating element (4) is formed in two layers, wherein an inner (40) and an outer layer (41) are provided, in particular the inner (40) layer is made from a different material from the outer layer (41) and/or has a different degree of foaming.

11. The multipart line (74) according to one of the preceding claims,
**characterised in that**
the insulating element (4) is designed to be thermally conductive for providing thermal conduction through the insulating element when providing adjacent plug assemblies (1, 2) which are designed to be thermally conductive and/or a plug part (10) which is designed to be thermally conductive and a coupling part (20) of the plug assemblies (1, 2) which is designed to be thermally conductive and/or an outer enclosure (11, 21) thereof which is designed to be thermally conductive.

12. The multipart line (74) according to Claim 11,
**characterised in that**
the inner layer (40, 45) of the insulating element (4) is designed to be thermally conductive and the outer layer (41, 44) is designed to be insulating, in particular the inner layer (40) is an aluminium layer or an aluminium lamination (140) of the outer layer (41, 44) and/or is designed as a thermally conductive sleeve (45), in particular a metal bushing, in particular a high-grade steel bushing.

13. The multipart line (74) according to one of the preceding claims,
**characterised in that**
the annular insulating element (4) has a substantially circular and/or polygonal outer shape, in particular a polygonal shape with rounded corner regions.

14. The multipart line (74) according to one of the preceding claims,
**characterised in that**
cutouts (43) and/or openings for trapping air are provided in the region of the inner through opening (42) of the annular insulating element (4) for improving the insulating effect.

15. The multipart line (74) according to one of the preceding claims,
**characterised in that**
the diameter (d) of the inner through opening (42) of the insulating element (4) is 3 to 6 mm, in particular 4 mm, and **in that** the wall thickness (a) of the insulating element (4) is 2 to 7 mm, in particular 3 mm.

## Revendications

1. Conduite en plusieurs parties (74), dans laquelle des parties de conduite (5, 84, 85) sont pourvues côté extrémité d'au moins un ensemble raccord (1, 2, 100, 101, 200, 201) avec au moins un élément de retenue (3), dans laquelle la partie raccord (10) de l'ensemble raccord (1, 100, 101) d'une partie de conduite (84) et une partie de couplage (20) de l'ensemble raccord (2, 200, 201) de la partie de conduite contiguë (85) sont ou peuvent être reliées par emboîtement et encliquetage du au moins un élément de retenue (3) au niveau de la partie raccord (10) et retrait de la partie de couplage (20) dans le sens inverse au raccordement pour le déplacement de l'élément de retenue (3) dans une position de verrouillage,
**caractérisée en ce que**
dans la zone d'emboîtement (15) de la partie raccord (10) des ensembles raccord (1, 2, 101, 200) reliés ou pouvant être reliés entre eux, aussi dans la distance ou fente restant après l'encliquetage de l'au moins un élément de retenue (3) au niveau de la partie raccord (10) entre le côté avant d'une bride de la partie raccord (10) ou le côté avant d'un encapsulage (11) l'entourant au moins partiellement et le côté avant d'une bride de la partie de couplage (20) ou de l'élément de retenue (3) et/ou un encapsulage (21) entourant au moins partiellement la partie de couplage (20) et l'élément de retenue (3), au moins un élément isolant (4) est agencé, lequel est réalisé comme un anneau pourvu d'une ouverture traversante intérieure (42), fermé de manière compressible axialement au moins dans la zone extérieure de l'élément isolant (4) à partir d'un matériau faiblement thermoconducteur pour empêcher une conduction thermique au travers de l'élément isolant (4) sur son côté extérieur, dans laquelle l'élément isolant (4) se trouve après le processus de raccordement de manière axialement comprimée dans la distance ou fente (13) restant entre les ensembles raccord (1, 2, 100, 101, 200, 201) et remplit de manière à isoler complètement la zone d'emboîtement (15).

2. Conduite en plusieurs parties (74) selon la revendication 1,
**caractérisée en ce que**
l'élément isolant (4) présente dans une position de départ non comprimée une première hauteur axiale s₀ pendant l'emboîtement et la forte compression une deuxième hauteur axiale s₁ et dans la position de montage finale pour une compression plus faible par rapport à celle-ci une troisième hauteur axiale s₂, dans laquelle s₀>s₂>s₁ et dans laquelle s₀ est supérieure à la largeur de fente (s_{Sp}).

3. Conduite en plusieurs parties (74) selon la revendication 1 ou 2,
**caractérisée en ce que**
des moyens pour la fixation de l'élément isolant (4) au niveau de l'ensemble raccord (1, 2, 101, 200), en particulier une liaison à complémentarité de formes et/ou à force et/ou de matière et/ou au moins un élément de fixation (6), en particulier un élément de fixation sous la forme d'une saillie d'encliquetage de type bride et/ou d'un couvercle (6) enfiché ou pouvant être enfiché sur la partie raccord (10) du connecteur (1, 101) et/ou une fixation par collage.

4. Conduite en plusieurs parties (74) selon l'une des revendications précédentes,
**caractérisée en ce que**
au niveau du connecteur et/ou de l'encapsulage entourant celui-ci au moins une surface d'appui axiale est prévue pour l'appui et le soutien axial de l'élément isolant.

5. Conduite en plusieurs parties (74) selon l'une des revendications précédentes,
**caractérisée en ce que**
l'élément isolant (4) est agencé sur au moins un épaulement axial de l'encapsulage (11, 21) et/ou du connecteur.

6. Conduite en plusieurs parties (74) selon l'une des revendications précédentes,
**caractérisée en ce que**
l'élément isolant (4) se trouve dans l'état intégré pressé entre deux surfaces axiales (14, 22) des ensembles raccord (1, 2) contigus,
en particulier agencé au niveau de ou sur un épaulement ou la butée de l'encapsulage (11, 21) côté extérieur et/ou du connecteur.

7. Conduite en plusieurs parties (74) selon l'une des revendications précédentes,
**caractérisée en ce que**
l'élément isolant (4) est comprimé dans l'état intégré et comprimé après l'assemblage de la partie de couplage (20) et la partie raccord (10) de deux ensembles raccord (1, 2, 101, 200) contigus de deux parties de conduite (84, 85) contiguës de 5 à 30 % par rapport à l'état non comprimé.

8. Conduite en plusieurs parties (74) selon l'une des revendications précédentes,
**caractérisée en ce que**
la conduite en plusieurs parties (74) présente deux parties de conduite (84, 85) dont l'une (84) se compose d'un matériau résistant à haute température et l'autre (85) se compose d'un matériau moins résistant à la température que celui-ci, dans laquelle le au moins un élément isolant (4) est prévu dans la zone de liaison (83) entre les deux parties de conduite (84, 85), ou que la conduite en plusieurs parties présente trois parties de conduite dont l'une se compose d'un matériau résistant à haute température et les deux autres parties de conduite se composent du matériau moins résistant à la température en revanche, dans laquelle respectivement un élément isolant (4) est agencé dans les deux zones de liaison (83) entre les parties de conduite.

9. Conduite en plusieurs parties (74) selon l'une des revendications précédentes,
**caractérisée en ce que**
l'élément isolant (4) se compose au moins partiellement d'au moins un matériau expansé, en particulier un matériau expansé à cellules fermées.

10. Conduite en plusieurs parties (74) selon l'une des revendications précédentes,
**caractérisée en ce que**
l'élément isolant (4) est réalisé à deux couches, dans laquelle une couche intérieure (40) et une couche extérieure (41) sont prévues, en particulier la couche intérieure (40) se compose d'un autre matériau que la couche extérieure (41) et/ou présente un autre degré d'expansion.

11. Conduite en plusieurs parties (74) selon l'une des revendications précédentes,
**caractérisée en ce que**
l'élément isolant (4) est réalisé de manière thermoconductrice pour la prévoyance d'une conduite thermique au travers de l'élément isolant lors de la prévoyance d'ensembles raccord contigus (1, 2) réalisés de manière thermoconductrice et/ou d'une partie raccord (10) réalisée de manière thermoconductrice et d'une partie de couplage (20) réalisée de manière thermoconductrice des ensembles raccord (1, 2) et/ou leur encapsulage (11, 21) réalisé de manière thermoconductrice côté extérieur.

12. Conduite en plusieurs parties (74) selon la revendication 11,
**caractérisée en ce que**
la couche intérieure (40, 45) de l'élément isolant (4) est réalisée de manière thermoconductrice et la couche extérieure (41, 44) est réalisée de manière isolante, en particulier la couche intérieure (40) est une couche d'aluminium ou un placage d'aluminium (140) de la couche extérieure (41, 44) et/ou sous la forme d'une douille thermoconductrice (45), en particulier une douille métallique, en particulier une douille en acier spécial.

13. Conduite en plusieurs parties (74) selon l'une des revendications précédentes,
**caractérisée en ce que**
l'élément isolant annulaire (4) présente une formation sensiblement ronde et/ou côté extérieur polygonale, en particulier formation polygonale avec des zones de coin arrondies.

14. Conduite en plusieurs parties (74) selon l'une des revendications précédentes,
**caractérisé en ce que**
dans la zone de l'ouverture traversante intérieure (42) de l'élément isolant annulaire (4) des évidements (43) et/ou des ouvertures sont prévues afin d'englober de l'air pour l'amélioration de l'action isolante.

15. Conduite en plusieurs parties (74) selon l'une des revendications précédentes,
**caractérisée en ce que**
le diamètre (d) de l'ouverture traversante intérieure (42) de l'élément isolant (4) est compris entre 3 et 6 mm, en particulier s'élève à 4 mm et que l'épaisseur de paroi (a) de l'élément isolant (4) est comprise entre 2 et 7 mm, en particulier s'élève à 3 mm.
